# EUROPEAN PATENT APPLICATION

(11) **EP 1 454 570 A1**
(43) Date of publication of application: **08.09.2004**
(21) Application number: 02786069.1
(22) Date of filing: 10.12.2002
(51) Int. Cl.: A47C 7/00

(54) **BODY SUPPORT DEVICE**

(30) Priority: 11.12.2001 JP 2001377878
(71) Applicant: Honda Access Corporation, Niiza-shi, Saitama 352-0011 (JP)
(72) Inventor: MATSUSHIMA, Seiya, c/o HONDA ACCESS CORPORATION, Niiza-shi, Saitama 352-0011 (JP); YOSHITAKE, Makoto, c/o HONDA ACCESS CORPORATION, Niiza-shi, Saitama 352-0011 (JP)
(74) Representative: Saint-Marc, Christophe Andréas
(86) International application number: PCT/JP2002/012890
(87) International publication number: WO 2003/049578

(57) **Abstract**

A body support assembly (1) capable of providing a fitting feeling to a user according to the user's body shape by holding the shape thereof matching the user's body shape. The body support assembly (1) comprises a supporting member (4) including a plurality of granulated materials (2) coated with a moisture-curable resin, and a stretchable cloth (3) covering the supporting member (4). The body support assembly (1) is used such that the cloth (3) is allowed to come in contact with the portion of the user's body so as to allow the granulated materials (2) to move relative to one another, and thus the supporting member (4) is deformed in a shape matching the portion of the user's body. Then, the moisture-curable resin is cured. The relative movements of the granulated materials (2) in the supporting member (4) are controlled by a frame (5) embracing an outer peripheral edge of the supporting member (4).

## Description

### BACKGROUND OF THE INVENTION

### Field of the Invention

The present invention relates to a body support assembly which is used when a user sits down in, for example, a seat, a chair or the like and can provide a fitting feeling to the user according to the user's body shape by holding the shape thereof matching the user's body shape.

### Description of the Related Art

A seat, a chair, such as an automotive seat, an office chair and a wheelchair are manufactured so as to fit an average user. Accordingly, they do not fit properly in some users.

Consequently, various kinds of cushions have been proposed. For example, Japanese Unexamined Patent Publication No. 9-224796 discloses a body support assembly which comprises a molded member employing a structure such that a predetermined amount of granulated materials coated with a moisture-curable urethane prepolymer are covered with a water-permeable material, the water-permeable material having a plurality of openings each smaller than the granulated material, while the water-permeable material is coated with a moisture-impermeable material. The moisture-curable urethane prepolymer and the water-permeable materials are unreactable with each other, exhibiting a low adhesive property relative to each other.

Meanwhile, Japanese Unexamined Patent Publication No. 2000-51255 discloses a body support assembly as a position-upholding tool which comprises an assembly including: a predetermined amount of granulated materials each having elasticity; and moisture-curable resin each having elasticity even after curing, in which a sufficient amount of the moisture-curable resin is mixed with the granulated materials so as to bond one granulated material to another when cured, while the granulated materials can move relative to one another according to a user's body shape before the moisture-curable resin cures.

Those body support assemblies are ones such that the moisture-curable resin cures after the granulated materials such as foamed polyurethanes are moved to take a specific shape as a whole according to a user's body shape, and thus the materials become immobilized in order to hold the specific shape. Those body support assemblies can rapidly and reliably support individual user's body, while the production process thereof is simple, and thus those body support assemblies are especially suitable for medical application to support a patient's head, etc.

Those body support assemblies, however, have the following problems when applied to a seat, a chair or the like to which they are installed in a limited installation area. Namely, those body support assemblies fit to a user's body by allowing the granulated materials such as foamed polyurethanes to move relative to one another, while a supporting member thereof containing the moving granulated materials is flattened by a pressure from the user's body in order to fit thereto, and thus the area of the supporting member is enlarged. Moreover, the enlargement of the area due to this flattening varies according to the individual user's body and the pressure therefrom, so that the resultant shape of the supporting member becomes irregular. Accordingly, those body support assemblies can not be used as they are for a seat or a chair whose size such as width is subjected to predetermined restrictions.

Therefore, it would be advantageous to provide a body support assembly which is able to not only solve the above-explained problems, but also support a user's body reliably while dispersing a pressure from the user's body with superior air permeability, since the product's value thereof can be improved.

The present invention has been made to solve the above problems and it is accordingly an object thereof to provide a body support assembly which can hold its shape matching a user's body shape so that the user can get a fitting feeling in accordance with the user's body shape.

### SUMMARY OF THE INVENTION

In order to attain the above object, according to a first aspect of the present invention, there is provided a body support assembly comprising: a supporting member including a plurality of granulated materials coated with a moisture-curable resin; and a moisture permeable member, the moisture permeable member being deformable by press and covering the supporting member, the body support assembly being used by allowing: the moisture permeable member to contact a portion of a user's body so as to move the granulated materials; the supporting member to deform in a shape according to the portion of the user's body; and the moisture-curable resin to cure, wherein the body support assembly further comprises a control means for controlling relative movements of the granulated materials, the control means defining a contour of the body support assembly.

The body support assembly employing the above-explained structure is moisturized, and then placed between: a portion of a seat coming in contact with hip, waist, back or the like of a user, namely, the portion of the seat necessary to hold the user; and the user's body. When the user sits down, pressing the body support assembly, the granulated materials in the supporting member move relative to one another and deform the whole shape to the specific shape fitting to a portion of the user such as hip, waist or the like. When the moisture-curable resin cures, the granulated materials with the specific shape are immobilized, and thus the shape matching the individual user's body is held. At that moment, since the relative movements of the granulated materials in the supporting member are controlled, the supporting member does not get out of shape when deformed. Accordingly, the body support assembly is suitable for a seat, a chair or the like. Specifically, since each of the granulated materials has elasticity, the position of the user's body can be reliably supported, while the pressure from the user's body can be dispersed, ensuring superior air permeability.

In the above-explained body support assembly, since the control means may comprise a frame embracing an outer peripheral edge of the supporting member, the granulated materials in the support assembly does not protrude out of the frame, and thus the body support assembly can hold its contour along the frame.

In the above-explained body support assembly, since the moisture permeable member may comprise a molded container having flexibility and moisture permeability, while the control means is arranged so as to cover the supporting member from one side thereof with the molded container and seal off an open side of the molded container, the granulated materials are moved to take the specific shape as a whole in association with the deformation of the molded container, and then immobilized by curing, with the specific shape fitting to the portion of the user such as hip, waist, back or the like. Accordingly, the specific shape matching the individual user's body can be held, and thus the body support assembly can take its shape in accordance with the molded container.

In the above-explained body support assembly, since the moisture permeable member may comprise molded containers each having flexibility and moisture permeability, while the control means is arranged so as to cover the whole circumference of the supporting member with the molded containers, the granulated materials are moved to take the specific shape as a whole in association with the deformation of the molded containers, and immobilized by curing with the specific shape fitting to the portion of the user such as hip, waist, back or the like. Accordingly, the shape matching the individual user's body can be held, and thus the body support assembly can take its shape in accordance with the molded containers.

Also, in the above-explained body support assembly, since the moisture permeable member may comprise a hardening layer of the granulated materials coated with the moisture-curable resin, the granulated materials being hardened thereby in a predetermined shape as a whole, while the control means includes the hardening layer, whereby the granulated materials which are not immobilized yet are surrounded by the hardening layer, and are moved inside thereof relative to one another and deformed. Accordingly, the body support assembly can have a shape matching the hardening layer of an outside surface. Moreover, the supporting member and the moisture permeable member can be made from the same material at a time, the productivity and economical efficiency of the body support assembly can be improved.

Moreover, in the above-explained body support assembly, since the moisture permeable member may comprise flexible sheet members, while the control means is arranged so as to cover both sides of the supporting member with the sheet members, the sheet members being seamed so as to divide the supporting member into a plurality of sections, the granulated materials are allowed to move only within each section, and thus the body support assembly can have a shape according to the one defined by the flexible sheet members.

Alternatively, according to a further aspect of the present invention, the body support assembly may further comprise a volume variable means in the supporting member, the volume variable means defining a contour of the support assembly. The body support assembly employing the above-explained structure is moisturized, and placed between: a portion of a seat coming in contact with hip, waist, back of a user or the like, namely, the portion of the seat necessary to hold the user; and the user's body. When the user sits down, pressing the body support assembly, the granulated materials in the supporting member are moved relative to one another and deform the whole shape thereof to the specific shape fitting to a portion of the user such as hip, waist or the like. When the moisture-curable resin cures, the granulated materials with the specific shape are immobilized, and thus the shape matching the individual user's body is held. At that moment, the granulated materials are flattened in accordance with the amount of depression the granulated materials are subjected to, and thus the whole area thereof is liable to be enlarged. However, by changing the volume of the supporting member in accordance with the flattening of the granulated materials and the enlargement of the area thereof, the body support assembly does not get out of shape. Accordingly, the body support assembly is suitable for the ones having only a limited installation area for installing the body support assembly, such as a seat, a chair or the like. Specifically, since each of the granulated materials has elasticity, the position of the user's body can be reliably supported, while the pressure from the user's body can be dispersed, and thus the body support assembly can have superior air permeability.

In the above-explained body support assembly, the volume variable means may be one which changes a volume of the supporting member by allowing: at least one side of the supporting member to be covered with a molded container having a predetermined shape; the molded container to be formed with a plurality of open-able sections; an open side of the molded container to be covered with a moisture permeable member that is deformable by press; the moisture permeable member to come in contact with a portion of a user's body in order to deform the supporting member and increase a pressure from the granulated materials inside the supporting member so that the plurality of open-able sections are opened, while the granulated materials are discharged from the opened open-able sections. When the granulated materials in the supporting member are pressed and the pressure thereof increases, the open-able sections of the molded container are opened, while the granulated materials are discharged from the opened open-able sections. Accordingly, the volume of the supporting member can be changed so as to hold the contour of the body support assembly, and thus it does not get out of shape when deformed.

Moreover, the volume variable member may comprise the buffering member, provided in the supporting member so as to absorb the change of volume thereof, and thus the volume of the supporting member can be changed by allowing the granulated materials to come into the buffering member, to thereby hold the contour of the body support assembly. Accordingly, the body support assembly does not get out of shape when deformed.

Also, the buffering member may comprise a foamed member.

Further, the supporting member provided with the control means may be arranged to include a foamed member.

Still further, the supporting member may be provided on a backrest of a seat, including a waist supporting member and a shoulder supporting member, and the supporting member may be formed such that thickness thereof decreases toward the shoulder supporting member. Alternatively, the supporting member may comprise a backrest obverse portion placed on a backrest of a seat and a bottom obverse portion placed on a bottom of the seat. Holding members may be provided on the supporting member.

### BRIEF DESCRIPTION OF THE DRAWINGS

FIG. 1 is a perspective view showing a body support assembly according to a first embodiment of the present invention;
FIG. 2 is a fragmentary sectional plan view showing the body support assembly of FIG. 1;
FIG. 3 is a cross sectional view showing the body support assembly of FIG. 1;
FIG. 4 is a front view showing a frame included in the body support assembly of FIG. 1;
FIG. 5 is a perspective view showing an applied condition of the body support assembly of FIG. 1;
FIG. 6 is a side view showing the applied condition of the body support assembly shown in FIG. 5;
FIG. 7 is a transverse cross sectional view showing the body support assembly of FIG. 5 in the applied condition;
FIG. 8 is a perspective view showing a body support assembly according to a second embodiment of the present invention;
FIG. 9 is a cross sectional view showing the body support assembly of FIG. 8;
FIG. 10 is a vertical cross sectional view showing a body support assembly according to a third embodiment of the present invention;
FIG. 11 is a perspective view showing a body support assembly according to a fourth embodiment of the present invention;
FIG. 12 is a cross sectional view showing the body support assembly of FIG. 11;
FIG. 13 is a perspective view showing a body support assembly according to a fifth embodiment of the present invention;
FIG. 14 is a cross sectional view showing the body support assembly of FIG. 13 along a line A-A;
FIG. 15 is a cross sectional view showing the body support assembly of FIG. 13 along a line B-B;
FIG. 16 is a cross sectional view showing the body support assembly of FIG. 13 along a line C-C;
FIG. 17 is a cross sectional viiew showing a container of the body support assembly of FIG. 13;
FIG. 18 is a plan view showing a body support assembly according to a sixth embodiment of the present invention;
FIG. 19 is a cross sectional view showing the body support assembly of FIG. 18;
FIG. 20 is a cross sectional view showing a body support assembly according to a seventh embodiment of the present invention;
FIG. 21 is a cross sectional view showing a mold used for manufacturing the body support assembly of FIG. 20;
FIG. 22 is a cross sectional view showing a modified example of the body support assembly shown in FIG. 20;
FIG. 23 is a cross sectional view showing a body support assembly according to a eighth embodiment of the present invention;
FIG. 24 is a body support assembly according to a ninth embodiment of the present invention;
FIG. 25 is a transverse cross sectional view showing the body support assembly of FIG. 24;
FIG. 26 is a side view showing an applied condition of the body support assembly shown in FIG. 24;
FIG. 27 is a cross sectional view showing the applied condition of the body support assembly of FIG. 25;
FIG. 28 is a perspective view showing a body support assembly according to a tenth embodiment of the present invention;
FIG. 29 is a cross sectional view showing the body support assembly of FIG. 28;
FIG. 30 is a cross sectional view showing an applied condition of the body support assembly of FIG. 28;
FIG. 31 is a cross sectional view showing an modified example of the body support assembly shown in FIG. 28;
FIG. 32 is a side view showing an applied condition of a body support assembly according to an eleventh embodiment of the present invention;
FIG. 33 is a side view showing an applied condition of a body support assembly according to a twelfth embodiment of the present invention;
FIG. 34 is a side view showing an applied condition of a body support assembly according to a thirteenth embodiment of the present invention;
FIG 35 (a) is a perspective view showing a frame included in the body support assembly shown in FIG. 34, while FIG. 35 (b) is a perspective view showing the body support assembly;
FIG. 36 is a side view showing an applied condition of a body support assembly according to a fourteenth embodiment of the present invention;
FIG. 37 is a perspective view showing the body support assembly of FIG. 36;
FIG. 38 is a cross sectional view showing the body support assembly of FIG. 37 along a line A-A;
FIG. 39 is a side view showing an applied condition of a body support assembly according to a fifteenth embodiment of the present invention;
FIG. 40 is a cross sectional view of FIG. 39 along a line A-A; and
FIG. 41 is a perspective view showing a frame included in the body support assembly of FIG. 39.

### DETAILED DESCRIPTION OF THE PREFERRED EMBODIMENTS

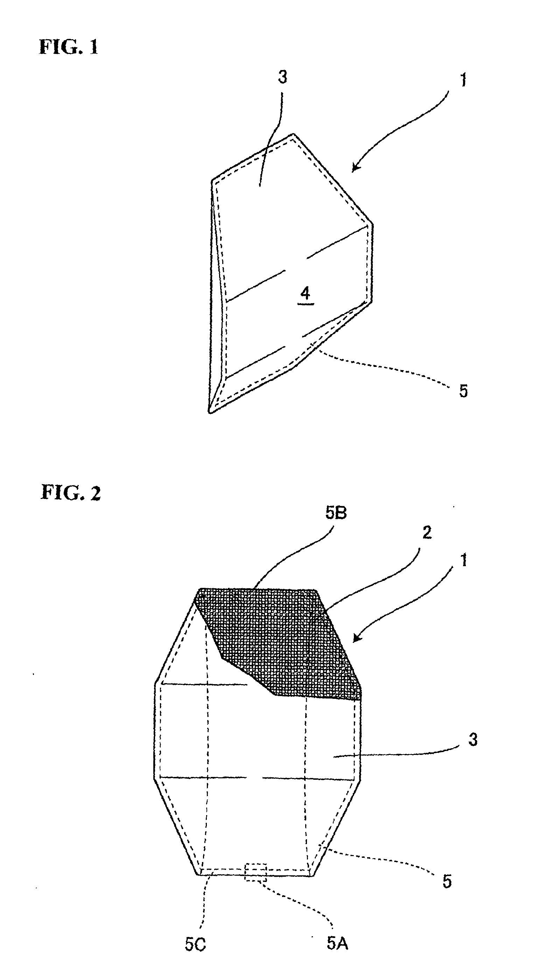

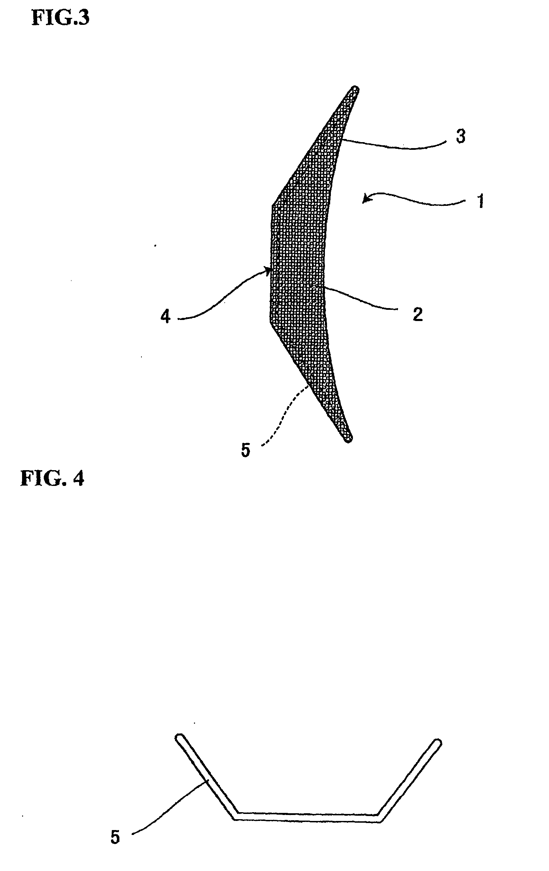

A first embodiment of the present invention will now be explained with reference to the accompanying drawings FIGs. 1 to 7. As shown in FIGs. 1 to 4, a body support assembly 1 according to this embodiment comprises: a supporting member 4; and a frame 5. The supporting member 4 includes: a plurality of granulated materials 2 coated with a moisture-curable resin; and a cloth 3 as a moisture permeable member which is deformable by press and made from a stretchable knitted fabric, textile fabric, non-woven cloth or a monofilament. The frame 5 is provided in the supporting member 4 as a framework. The frame 5 is essentially octagonal in a plane but bent three-dimensionally. In order to hold in a manner like wrapping a portion of the user's body from right and left sides thereof, the cloth 3 employs a structure such that the size thereof is set to be slightly larger than that of the portion of the user's body so as to provide a well supporting effect. According to this embodiment, the frame 5 serves as a control means for controlling relative movements of the granulated materials 2 within the supporting member 4. Meanwhile, the cloth 3 may be fixed to the frame 5. For example, the cloth 3 may be adhered to the frame 5, or stitched thereonto.

For the granulated material 2 in the above-explained body support assembly 1 is preferred one having adequate elasticity and nonreactive with a moisture-curable resin (described later), or one finished so as not to be reactive with the moisture-curable resin in a non-cured condition. For example, olefin-base granulated materials such as those made from polyethylene, polypropylene or a copolymer thereof with elasticity added thereto by softener or plasticizer, as well as those made from rubber-base materials with elasticity added thereto in a similar way or having elasticity themselves, such as vinyl acetate copolymer, polyvinyl chloride, polystyrene, polyester, polyether, polyurethane, neoprene, polybutadiene, silicon or any other rubber-base material are preferable. Moreover, an elastic material or a gelatinous material that are nonreactive with the moisture-curable resin may also be used therefor.

To be more precise, the following products can be used as the granulated material 2, : COSMOGEL (commercial product made by Cosmo instruments Co., Ltd); MNCS (made by Bridgestone Co., Ltd); ALPHAGEL (made by Seagel Co., Ltd); TORAYPEF (made by Toray Industries, Inc); MITSUFUKU FOAM (made by Mitsufuku Industries Co., Ltd); EXCESEAL (made by Inoac Kabushiki Kaisha); CALSOFT (made by Takiron Co., Ltd); NEOPLEN Rubber (made by Yamamoto Chemical Ind. Co., Ltd); CR Rubber (made by Daiwabo Co., Ltd or Marushinkakou Kabushiki Kaisha); SILICON sponge (made by Chiyoda Gomu Kabushiki Kaisha, Inoac Kabushiki Kaisha or Shinetsu Kagaku Kougyou Kabushiki Kaisha) , etc.

Each of the above-described granulated materials 2 may be formed in spherical shape, bar-shape, cubical shape, cuboidal shape, cylindrical shape, discotical shape, or other suitable shapes. It is preferable that the granulated material 2 is formed in corner-free shape, specifically, spherical shape. Moreover, from a standpoint of the elasticity of the body support assembly 1, the granulated material 2 is preferably formed so as to be solid, to have hollows, or to be foamed. In a case where the granulated material 2 is a foamed one, it is preferable to form each of the granulated material 2 to be a closed cell so that the moisture-curable resin (described later) would not permeate inside the granulated material 2. Specifically, one having a skin layer on the surface is suitable.

The size of each granulated material 2 varies depending on: the position to use the body support assembly 1; the material of the granulated material 2; and types or kinds of the moisture-curable resin. Large granulated material 2 results in high permeability to air, but if it is too large, it causes decrease in deformability and surface smoothness thereof, and thus the fitting comfort of the body support assembly 1 would be inferior. Accordingly, the granulated material 2 of less than about 8 cm³ is preferable, more preferably that of 0.125 cm³ or below allows the body support assembly 1 to be easy-to-use and to have a smoothed surface. Alternatively, the granulated material 2 can be made from two or more kinds of above materials having different qualities, shapes, characteristics and/or sizes.

Further, the hardness of the material of the above-explained granulated materials 2 is set to be about 2kg/cm² or below under 25% compressive strength test for cushioning soft urethane (JIS K6401 5.4), and preferably, set to be about 1.0kg/ cm² or below. Still further, compressive residual strain thereof (JIS K 6401 5.5) is set to be about 15% or below, preferably, about 13% or below. In a case where the compressive strength is over 2kg/cm² or the compressive residual strain over 15%, the granulated materials 2 are so hard that a distortion thereof would be developed during the use, and thus it is not desirable.

For the moisture-curable resin for coating the above-described granulated materials 2, hydraulic urethane prepolymer is preferable since it easily cures when water is applied. The hydraulic urethane prepolymer is prepolymer having isocianate group in a terminal obtained by a reaction of polyol and polyisocianate. Meanwhile, other moisture-curable resin such as moisture-curable silicon resin may be used. As the moisture-curable resin, one having an appropriate elasticity after cured is preferable. Alternatively, the granulated material 2 may be one which bonds to the moisture-curable resin when the moisture-curable resin cures by the addition of water, or one which is immobilized without bonding to the moisture-curable resin in a state where it is embraced by the moisture-curable resin. A catalytic agent, a fixing agent, an anti-forming agent, an antioxidant, a coloring agent, a thixotropy adding agent, a bulking agent, etc. can be accordingly added to the moisture-curable resin from the standpoints of the hardening time, preservation-stability, acceleration of defoaming when cured, finished color tone and so on. As those additives, well-known compounds can be selected according to the composition of the moisture-curable resin.

In a case where the moisture-curable resin comprises hydraulic urethane prepolymer, bis (2,6-dimethyl molpholino) diethyl ether, triethylene diamine, cyclohexylamine, dimethyl ethanolamine, substitution-molpholine, dimethyl piperazine, or the like can be used as a curing catalyst. In a case where a thixotoropy adding agent is added, maldistribution of the moisture-curable resin can be prevented when the moisture-curable resin is preserved in a mixed condition with the granulated material 2, and thus a state where both the moisture-curable resin and the granulated material 2 are homogeneously mixed can be held. As the thixotoropy adding agent for hydraulic urethane prepolymer, the followings can be used: silica; titanium oxide; organic polyalkylene-modified compound comprising polyalkylene glycol whose hydroxyl end group is treated with a hydroxyl treatment agent, such as polyethylene glycol, polypropylene glycol or a copolymer thereof treated with methyl chloride or a fatty acid; aromatic carboxylic acid esters; benzylidene sorbitols, zytrylidene sorbitols or the like synthesized by acetal reaction of D-sorbitol with aromatic aldehyde. The amount to be used is about 0.01 to 6%, preferably about 0.05 to 3% relative to hydraulic urethane prepolymer.

Hydraulic urethane prepolymer is suitable as the moisture-curable resin since it has the following desirable properties, though they depend on the use thereof, such that: the apparent strength thereof enabling a user's weight to be applied as a load can be obtained in about 3 to 30 minutes' curing time after water is applied; the change of volume thereof due to a reaction is small; harmful effect against human body such as the producing of fever, stimulation or the like seldom occurs; and stability of preservation is high.

Sufficient amount of the above-explained moisture-curable resin is appropriately mixed so that the surfaces of the all granulated materials 2 are coated. Normally, more than about 7.5 g of the moisture-curable resin per 1 litter (volume) of the granulated materials 2 is sufficient, which is preferably about 45 to 420 g. The granulated materials 2 and the moisture-curable resin are mixed by a versatile mixer, a concrete mixer or any other suitable mixer or the like, preferably under an environment in which mixing temperature is 20 degrees centigrade and relative humidity (RH) is 20% or below, such that dry nitrogen gas is filled in a chamber of the above mixer, and then a predetermined amount of the granulated materials 2 is put therein and stirred while a predetermined amount of the moisture-curable resin is mixed therewith, until they are mixed in a homogeneous state.

After mixing, each of the granulated materials 2 is coated with the sufficient amount of the moisture-curable resin for sticking one granulated material 2 to another. Each of the granulated materials 2 is gathered in a mass by the non-cured moisture-curable resin, but in a condition such that each of them can move relative to one another. The mixture of the granulated materials 2 and the moisture-curable resin can be preserved so as to remain non-cured, by storing it in a moisture-proofed one such as a packaging bag or sheet including an aluminum foil, a box and a can.

The cloth 3 is made for example from: synthetic fibers of polyester, polypropylene, polyethylene, polyacrylamide, polyurethane, styrene-isoprene-styrene-copolymer (SIS), polyamide or other kinds of synthetic fibers; regenerated fibers of rayon, cotton, linen or the like; and inorganic fibers such as natural fibers, glass fibers, etc. A material of the cloth 3 reactive with the moisture-curable resin or having a large moisture content may be subjected to preliminary surface treatment to have non-reactivity, or dried to be dehydrated. For hydraulic urethane prepolymer, a preferable material of the cloth 3 is one which does not react with the none-cured urethane prepolymer, such as polyester, polypropylene, polyethylene, polyurethane, SIS or the like. Specifically, fibers of polyester, polypropylene, polyethylene, polyurethane or SIS, each having heat sealing characteristic, or blended fabrics of either one of them are preferred. Those materials are formed in a knit, textile, non-woven cloth, molten-net or the like, but it is desirable to form them flexible and extendible enough to fit well to the contour of the portion of the user's body when applied. For such flexibility and extendibility, one having at least 15 % elongation percentage in either direction of longitudinal or transversal directions is preferable. Less than that percentage of elongation may result in a poor compatibility with the user's body when deforming its shape.

The frame 5 is made from a material having a certain level of rigidity and elasticity such as a steel-made wire, synthetic resins and so on. For example, the steel-made wire may be three dimensionally bent in a desired shape and both ends thereof may be jointed by a caulking portion 5A so as to shape the frame 5. Alternatively, the frame 5 may be made from a synthetic resin such as foamed polystyrene which is formed in a similar shape.

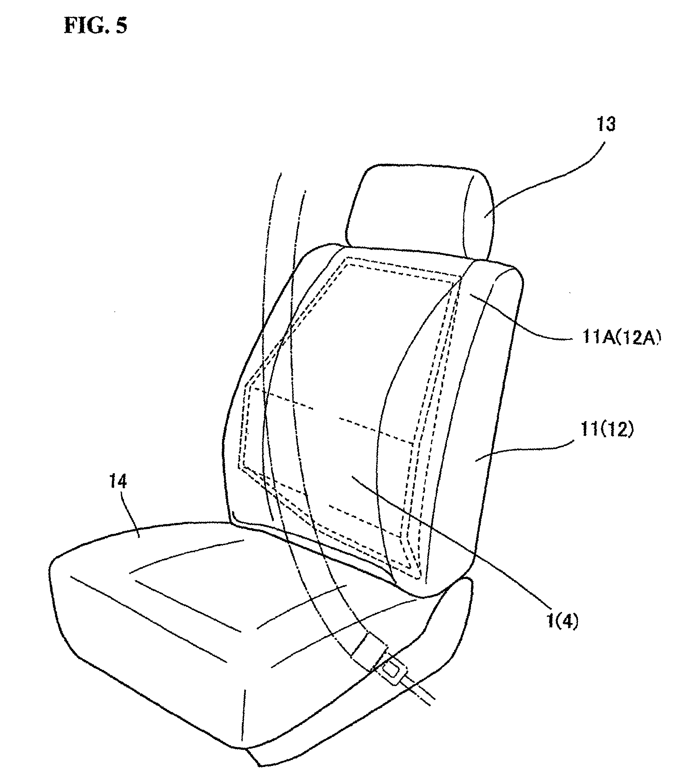

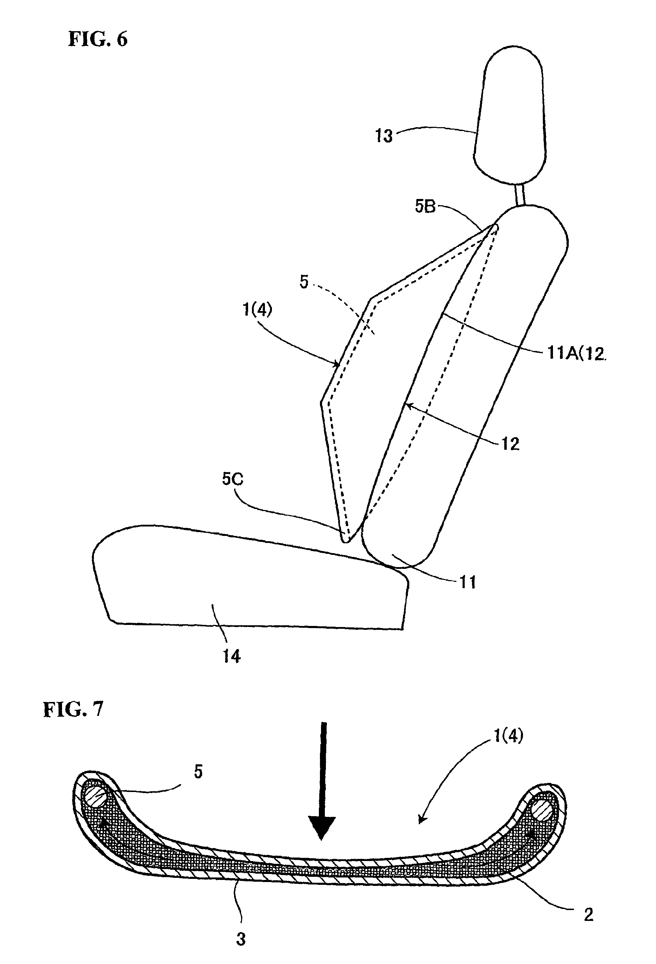

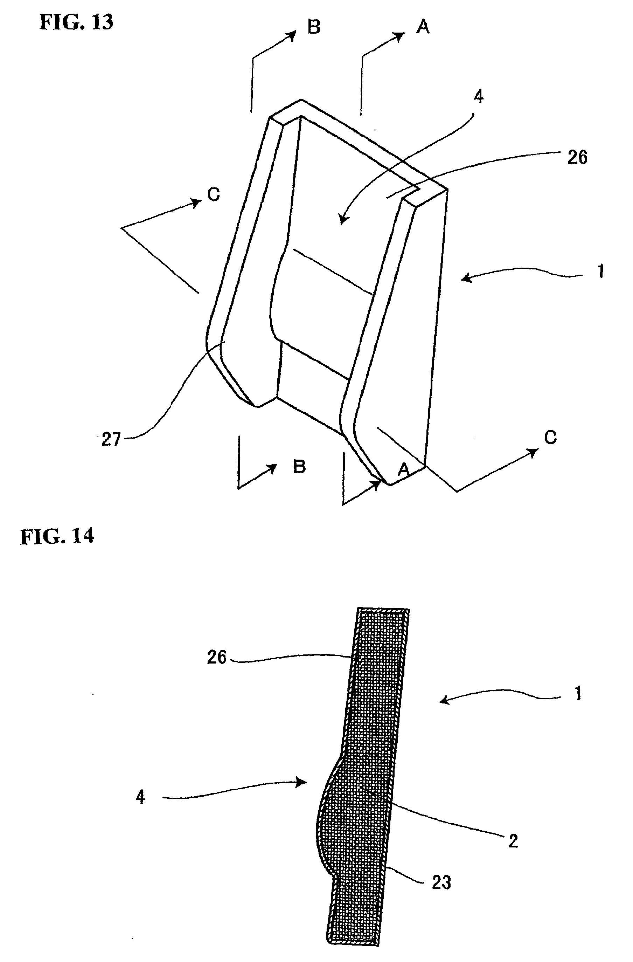

The body support assembly 1 of this embodiment is put into a non-illustrated moisture-proof bag and sealed therein. Consequently, the granulated materials 2 are not exposed to moisture in this sealed condition, and thus the curing of the moisture-curable resin is certainly prevented, while the moisture-curable resin coating the granulated materials 2 can be cured in a short time by opening the moisture-proof bag and then applying water or spraying a catalyst solution thereto so as to allow the moisture-curable resin to be exposed to moisture. As shown in FIGs. 5 and 6, the above-explained body support assembly 1 is placed on a seat cover 12 of an automotive seat 11 or the like. To be more precise, the body support assembly 1 of this embodiment is placed on a backrest 11A of the seat 11 such that upper edge 5B and lower edge 5C of the frame 5 serve as supporting points. Namely, the body support assembly 1 serves as a cushioning which supports a user's body from back to waist thereof. By putting a cover sheet (not shown), such as a stretchable fabric or the like which is proper for the automotive seat, over a back cover 12 A, the body support assembly 1 is completely hidden, and thus the favorable appearance of the seat 11 equipping the body support assembly 1 can be obtained. Meanwhile, reference number 13 in FIGs. 13 denotes a headrest, while reference number 14 denotes a bottom of the seat 11. The body support assembly 1 supports the user's body from shoulder to waist, and employs a structure such that thickness thereof gradually decreases from the portion for supporting the waist of the user to the portion for supporting the shoulder of the user. Accordingly, the user's shoulder is supported without an inter-space between the user's back and the backrest 11A. This makes it possible to stably support the user's head by the headrest 13.

Next, operations of the body support assembly 1 employing the above-explained structure will now be explained. First of all, the body support assembly 1 is taken out from the moisture-proof bag (not shown). The moisture-curable resin starts curing when water is forced into the cloth 3 (the moisture permeability member of the body support assembly 1) by pressingly putting an atomist spray or the like to the cloth 3. Then, the frame 5 is placed on the backrest 11A of the seat 11, while the cover sheet is put over there if necessary.

Next, when the user (not shown) sits down while pressing his/her body to the body support assembly 1, the stretchable cloth 3 stretches, while the granulated materials 2 in the supporting member 4 move relative to one another and rapidly deform the whole shape thereof to the specific shape fitting to the user's body. When the moisture-curable resin coating the surfaces of the granulated materials 2 cures in a short time (3-5 minutes), the granulated materials 2 are immobilized and thus the specific shape thereof can be held. At the central portion of the supporting member 4, the granulated materials 2 become thinner corresponding to the amount of the pressure from the user and thus the planer shape of the supporting member 4 is urged to be changed by the granulated materials 2, but the supporting member 4 does not protrude outside the frame 5 since the supporting member 4 is embraced by the frame 5. As a result, both right and left edges of the supporting member 4 inflate and hold the user's body in a manner like wrapping the user's body from right and left sides.

Since the body support assembly 1 can instantly and easily deform its shape matching the individual user's body shape while the portion of the body support assembly 1 facing the seat 11 can deform its shape smoothly in accordance with the seat 11 and then harden, the body support assembly 1 can be placed without a displacement relative to the seat 11. Moreover, whilst the body support assembly 1 holds its shape by allowing the moisture-curable resin coating the granulated materials 2 to cure, yet it can have an appropriate softness as well as hardness since each granulated material 2 has elasticity. Further, it can also have an air permeability so as to essentially prevent the user from getting sweaty when used for a long time since there is a space between each of the granulated materials 2. Therefore, it can provide a comfortable holding and cushioning performance to the user.

Moreover, since the body support assembly 1 employs a simple structure such that the granulated materials 2 coated with the moisture-curable resin are covered by the cloth 3 while the frame 5 is used as a framework, it can be simply designed, and is excellent in mass-productivity. Therefore, the body support assembly 1 can be manufactured at a low-cost. Further, since the body support assembly 1 is preserved in the moisture-proof bag and sealed therein, the granulated materials 2 can be prevented from getting immobilized due to the granulated materials 2 sticking to one another. Accordingly, the supporting member 4 can be prevented from becoming solid unless the body support assembly 1 is taken out of the moisture-proof bag, and thus the body support assembly 1 has excellent transporting, distributing and storing abilities, and is extremely easy to handle.

As explained above, according to this embodiment, the body support assembly 1 comprising: a supporting member 4 including the plurality of granulated materials 2 coated with a moisture-curable resin; and a cloth 3 as a moisture permeable member being deformable by press, the cloth 3 covering the supporting member 4, the body support assembly 1 being used by allowing: the moisture permeable member to contact a portion of a user's body so as to move the granulated materials 2 relative to one another; the supporting member 4 to deform in a shape according to the portion of the user's body; and the moisture-curable resin to cure, wherein the body support assembly 1 further comprises a frame 5 as a control means for controlling relative movements of the granulated materials 2, the frame 5 defining a contour of the supporting member 4. Thus, the relative movements of the granulated materials 2 in the supporting member 4 are controlled by allowing the frame 5 to surround the outer peripheral edge of the supporting member 4. The body support assembly 1 is moisturized, and set between the seat 11 and the user's body. When the user sits down while pressing the body support assembly 1, the granulated materials 2 in the supporting member 4 move relative to one another and deform the whole shape thereof to the specific shape fitting to the portion of the user's body such as hip, waist or the like. When the moisture-curable resin cures, the granulated materials 2 with the specific shape are immobilized, and thus the shape matching the individual user's body is held. Since the relative movements of the granulated materials 2 in the supporting member 4 are controlled, the supporting member 4 does not get out of shape when deformed. Accordingly, the body support assembly 1 is suitable for a seat, a chair or the like whose width is subjected to restrictions. Specifically, since each of the granulated materials 2 has elasticity, the position of the user's body can be reliably supported and the pressure from the user's body can be dispersed, and the body support assembly 1 can have superior air permeability.

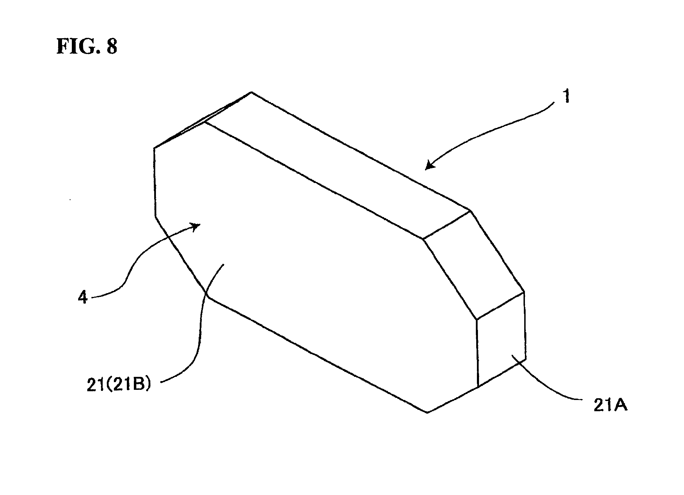

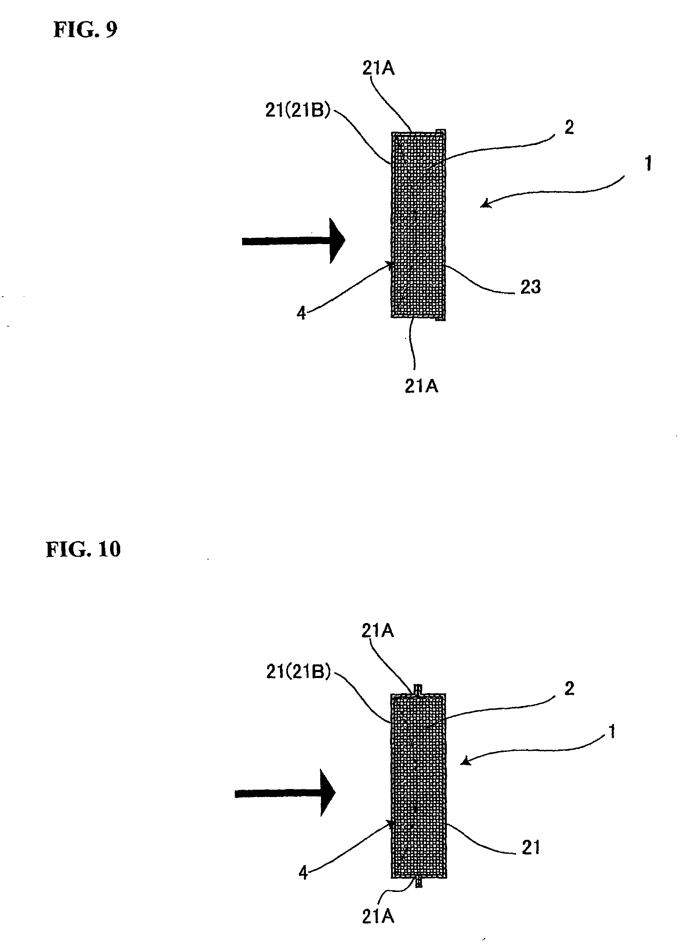

Next, a second embodiment of the present invention will now be explained with reference to FIGs. 8 and 9. The body support assembly according to this embodiment essentially employs the same structure as that of the first embodiment, and thus the same reference numbers will denote the same structure portions, while detailed explanations thereof will be omitted. In the body support assembly 1 of this embodiment, the supporting member 4 employs a structure such that the plurality of granulated materials 2 coated with the moisture-curable resin are contained in a molded container 21 having deformability, while an open surface side of the molded container 21 is covered with a film 23 or the like. In this embodiment, the control means for controlling relative movements of the granulated materials 2 within the supporting member 4 comprises: the molded container 21 covering one surface of the supporting member 4; and the film 23 or the like covering the open surface of the molded container 21. The molded container 21 is made up of a plastic mesh material having elasticity and moisture-permeability. As shown in FIG. 8, the molded container 21 is a box whose planer shape is octagonal, like a rectangular whose edges are cut in crosswise. Meanwhile, the deformable molded container 21 mentioned in this specification is one made from a material having flexibility or fragility. As the material having flexibility may preferably be used one having air permeability and moisture permeability, such as a cardboard, a denim fabric or a plastic mesh made of polypropylene, nylon or the like. Alternatively, various kinds of a plastic sheet or film having no air permeability and moisture permeability but having flexibility can be used in the same way by being formed with a plurality of pores. On the other hand, the material having fragility is one which is not collapsed when a stress is applied but cracked and deformed, so that it can acquire air permeability and moisture permeability. To be more precise, a shell of a thin glass, acrylic resin or calcium carbonate can be used as the material having fragility.

In the above-explained body support assembly 1, the granulated materials 2 and the moisture-curable resin are the same as ones in the first embodiment. Further, the body support assembly 1 of this embodiment is also put into a non-illustrated moisture-proof bag and sealed therein.

Next, operations of the body support assembly 1 employing the above-explained structure will now be explained. First of all, the body support assembly 1 is taken out from the moisture-proof bag (not shown). The moisture-curable resin coating the granulated materials 2 starts curing when water is applied to the molded container 21 by spraying or the like. Then, a cover sheet is put over the molded container 21 if necessary, while the body support assembly 1 is set at the automotive seat 11 in the similar way explained in the first embodiment so that the molded container 21 of the body support assembly 1 faces up. Next, when the user sits down while pressing the user's body portion(s) such as waist, back, legs, etc. to the body support assembly 1, the molded container 21 deforms, while the granulated materials 2 in the supporting member 4 move relative to one another, and rapidly deform the whole shape to the specific shape fitting to the user's body and hold this specific shape by being immobilized when the moisture-curable resin coating the surfaces of granulated materials 2 cures in a short time (3-5 minutes). The shape of the supporting member 4 is urged to be changed in accordance with the amount of press the granulated materials 2 are subjected to, but the supporting member 4 does not protrude out of the molded container 21 since one side of the supporting member 4 is covered by the molded container 21 so that relative movements of the granulated materials 2, which occurs in a direction toward the one side and in a lateral direction relative to a bottom surface 21B embraced by a peripheral wall 21 A of the molded container 21, is controlled. Accordingly, the body support assembly 1 can be deformed in a shape controlled by the molded container 21. Moreover, whilst the body support assembly 1 is one which holds its shape by allowing the moisture-curable resin coating the granulated materials 2 to cure, it can have an appropriate softness as well as hardness since each granulated material 2 has elasticity, while it can have an air permeability so as to essentially prevent the user from getting sweaty when used for a long time since there is a pore space among the granulated materials 2. Therefore, it can provide a comfortable holding and cushioning performance to the user.

Next, a third embodiment of the present invention will now be explained with reference to FIG. 10. The body support assembly according to the third embodiment essentially employs the same structure as that of the second embodiment, and thus the same reference numbers will denote the same structure portions, while detailed explanations thereof will be omitted. In the body support assembly 1 of this embodiment, the supporting member 4 employs a structure such that the plurality of granulated materials 2 coated with the moisture-curable resin are contained in a pair of the molded containers 21 each having deformability. In this embodiment, the control means for controlling the relative movements of the granulated materials 2 within the supporting member 4 comprises the pair of molded containers 21 covering all periphery of the supporting member 4. Each of the molded containers 21 comprises a plastic flexible mesh material having moisture-permeability. In the above-explained body support assembly 1, the granulated materials 2 and the moisture-curable resin are the same as ones in the first embodiment. Further, the body support assembly 1 according to this embodiment is also put into a non-illustrated moisture-proof bag and sealed therein. The body support assembly 1 according to the third embodiment can be used in the same way as explained in the second embodiment. Specifically, since both sides of the supporting member 4 are molded containers 21, the body support assembly 1 can be used irrespective of which side of the body support assembly 1 faces up and which side thereof faces down.

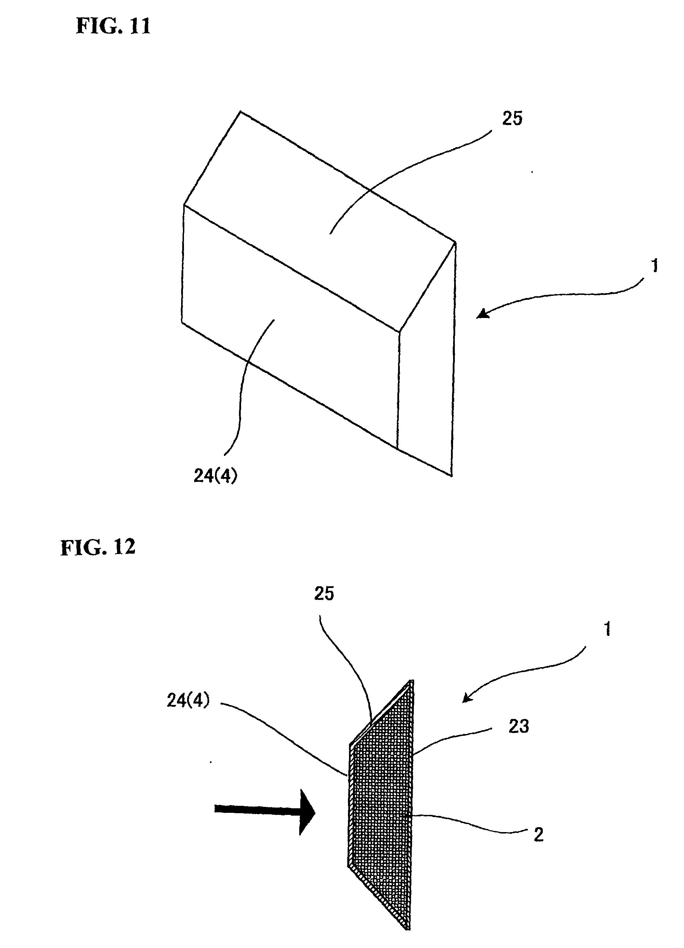

Next, a fourth embodiment of the present invention will now be explained with reference to FIGs. 11 and 12. The body support assembly 1 according to the fourth embodiment essentially employs the same structure as that of the second embodiment, and thus the same reference numbers will denote the same structure portions, while detailed explanations thereof will be omitted. In the body support assembly 1 of this embodiment, the supporting member 4 employs a structure such that the plurality of granulated materials 2 coated with the moisture-curable resin are contained in a molded container 24 having deformability, while open side of the molded container 24 is covered by a film 23 or the like. In this embodiment, the control means for controlling the relative movements of the granulated materials 2 in the supporting member 4 comprises: the molded container 24 covering the supporting member 4 from one side thereof; and the film 23 or the like covering the open side of the molded container 21. The molded container 24 comprises a plastic flexible mesh material having moisture-permeability and, as shown in FIG. 11, it is formed in a box shape such that it is rectangular in a plane but having tapered portions 25 on the upper and lower ends thereof, the tapered portions 25 having smooth slopes. In the above-explained body support assembly 1, the granulated materials 2 and the moisture-curable resin are the same as ones in the first embodiment. Further, the body support assembly 1 of this embodiment is also put into a non-illustrated moisture-proof bag and sealed therein.

The body support assembly 1 of the fourth embodiment can be used in the same way as explained in the second embodiment. Specifically, since the tapered portions 25 having smooth slopes are formed on the upper and lower ends of the molding portion 24, a bump between the body support assembly 1 and the automotive seat 11 is not essentially created when the body support assembly 1 is placed on the automotive seat 11. Therefore, the user essentially does not feel uncomfortable.

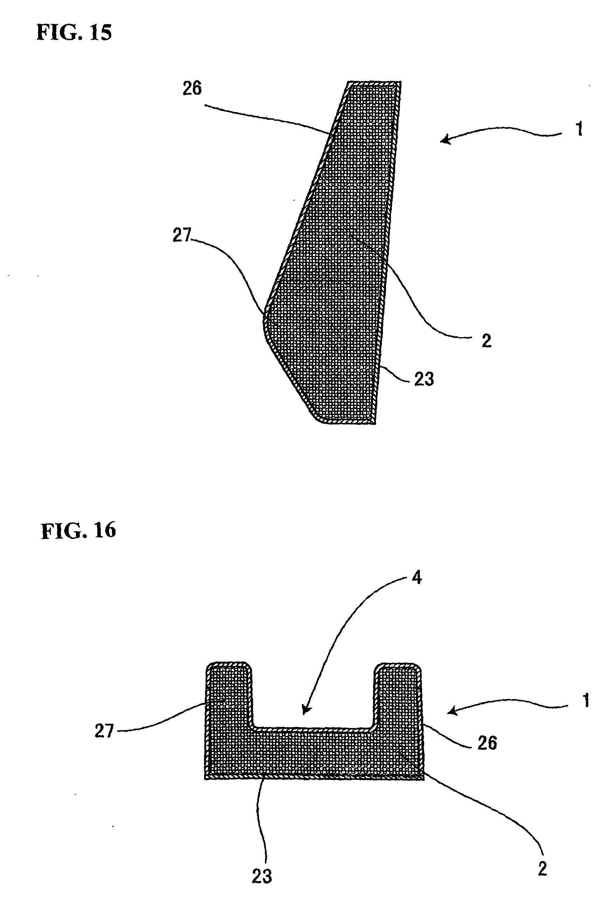

Next, a fifth embodiment of the present invention will now be explained with reference to FIGs. 13 to 17. The body support assembly according to the fifth embodiment essentially employs the same structure as that of the second embodiment, and thus the same reference numbers will denote the same structure portions, while detailed explanations thereof will be omitted. In the body support assembly 1 of this embodiment, the supporting member 4 employs a structure such that the plurality of granulated materials 2 coated with the moisture-curable resin are contained in a molded container 26 having flexibility, while open side of the molded container 26 is covered by a film 23 or the like. In this embodiment, the control means for controlling the relative movements of the granulated materials 2 in the supporting member 4 comprises: the molded container 26 covering one side of the supporting member 4; and the film 23 or the like covering the open side thereof. The molded container 26 comprises a plastic mesh material having flexibility and moisture-permeability. As shown in FIG. 13, it is formed in a box shape such that it is rectangular in a plane but having thicker hold portions 27 on the right and left ends thereof. In the above-explained body support assembly 1, the granulated materials 2 and the moisture-curable resin are the same as ones in the first embodiment. Further, the body support assembly 1 of this embodiment is also put into a non-illustrated moisture-proof bag and sealed therein. The body support assembly 1 according to the fifth embodiment can be used in the same way as explained in the second embodiment. The body support assembly 1 of this embodiment is bucket seat type having thicker hold portions 27 on the right and left sides of the molded container 26. In general, manufacturing one having such a complicated contour needs a lot of work. The body support assembly 1 according to this embodiment, however, can be shaped in such complicated contour by shaping the molded container 26 correspondingly, and thus the body support assembly 1 is suitable for being formed in various kinds of shape.

Moreover, in the body support assembly 1 according to this embodiment, since the supporting member 4 is placed on the backrest 11A of the seat 11 while the hold portions 27 are formed on the right and left sides of the molded container 26, the body support assembly 1 can hold the back of the user from both right and left sides. Accordingly, the user can sit down in a condition without a stress applied to the muscles from the waist to the back, and thus a stress to the waist of the user can be reduced.

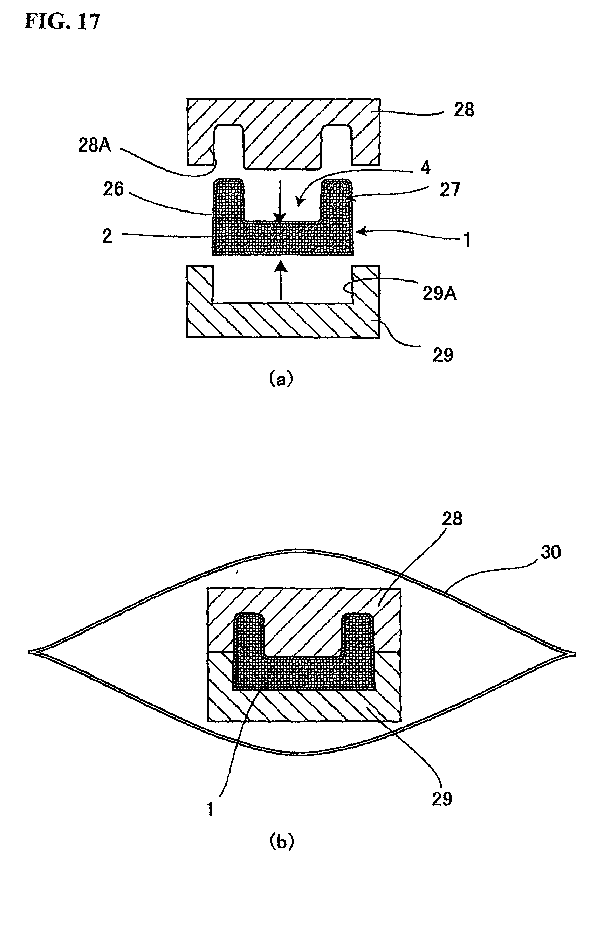

Meanwhile, since the body support assembly 1 according to this embodiment employs a complicated form such that it has the molded container 26 having flexibility or fragility, the hold portions 27 might be deformed during the preservation and transportation thereof. In this connection, the body support assembly 1 may be covered by a container which is made from, for example, expanded polystyrene so that the deformation of the molded container 26 can be prevented. As shown in FIG. 17, this container comprises: an upper part covering member 28 having a concaved portion corresponding to the upper-half shape of the body support assembly 1; and a lower part covering member 29 having a concaved portion corresponding to the lower-half shape of the body support assembly 1. The molded container 26 is kept in its initial shape by covering the same with the upper part covering member 28 and the lower part covering member 29, and then the body support assembly 1 with the molded container 26 is put into the moisture proof bag 30 and sealed therein so as to prevent external force from being applied thereto. Accordingly, the deformation of the molded container 26 can be prevented. Needless to say, such external force blockage container comprising the upper part coveting member 28 and the lower part covering member 29 can be used in the other embodiments.

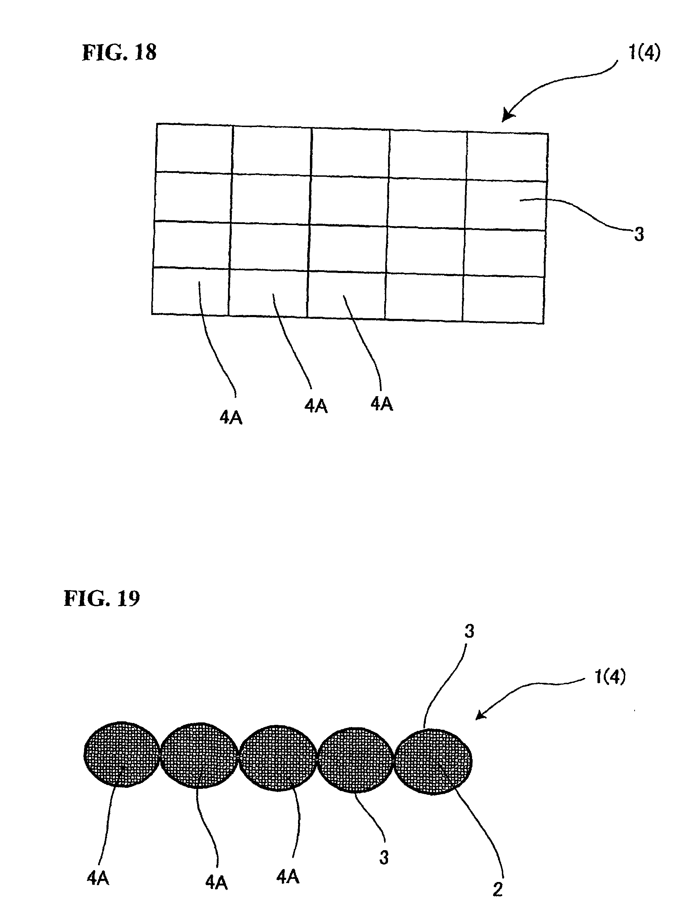

Next, a sixth embodiment of the present invention will now be explained. As shown in FIGs. 18 and 19, in the body support assembly 1 according to this embodiment, the supporting member 4 employs a structure such that the plurality of granulated materials 2 coated with the moisture-curable resin are covered by two sheets of stretchable cloths 3 made from knitted fabrics, textile fabrics, non-woven cloths or monofilaments formed by strings of a fiber assembly as a moisture permeable member deformable by press. Two sheets of the cloths 3 are sewed in grids so as to form a plurality of sections 4A. In order to hold and wrap the portion of the user's body from right and left sides for achieving a well supporting effect, the cloth 3 employs a structure such that the size thereof is set to be slightly larger than that of a portion of the user's body to be supported by the body support assembly 1. In the body support assembly 1, the granulated materials 2 and the moisture-curable resin are the same as ones explained in the first embodiment. Further, the body support assembly 1 of this embodiment is also put into a non-illustrated moisture-proof bag and sealed therein.

Operations of the body support assembly 1 employing the above-explained structure will now be explained. First of all, the body support assembly 1 is taken out from the moisture-proof bag (not shown). The moisture-curable resin starts curing when water is applied into the cloths 3 (the moisture permeability member of the body support assembly 1) by, for example, spraying the water to the cloth 3. The frame 5 is placed on the backrest 11A, and a cover sheet is put over there.

Next, when the user sits down while pressing the user's body to the body support assembly 1, the stretchable cloths 3 elongates, while the granulated materials 2 in the supporting member 4 move relative to one another, and rapidly deform the whole shape to the specific shape fitting to the user's body and hold this specific shape by being immobilized when the moisture-curable resin coating the surfaces of granulated materials 2 cures in a short time (3-5 minutes). At the central portion of the supporting member 4, the granulated materials 2 become thinner in accordance with the amount of press they are subjected to, and thus the planer shape of the supporting member 4 is urged to be changed by the granulated materials 2. The granulated materials 2, however, do not protrude out of the sections 4A since they are divided by the sections 4A. As a result, both right and left edges of the supporting member 4 only inflate and hold the user's body so as to wrap the user's body.

Since the body support assembly 1 can instantly and easily deform its shape to the specific shape matching the individual user's body while the portion of the body support assembly 1 facing the seat 11 can deform its shape and hardens corresponding to the shape of the seat 11 smoothly, the body support assembly 1 can be essentially placed without a displacement. Moreover, the body support assembly 1 holds its shape by allowing the moisture-curable resin coating the granulated materials 2 to cure, but it can have an appropriate softness as well as hardness since each granulated material 2 has elasticity, while it can have an air permeability so as to essentially prevent the user from getting sweaty when used for a long time. Therefore, it can provide a comfortable holding and cushioning.

Further, the body support assembly 1 can be simply designed and have good mass-productivity since the body support assembly 1 employs a simple structure such that the granulated materials 2 coated with the moisture-curable resin are covered by the stretchable cloths 3. Therefore, the body support assembly 1 can be simply manufactured at a low-cost. Still further, since the body support assembly 1 is preserved while being put into the moisture-proof bag and sealed therein, the granulated materials 2 can be prevented from sticking one another and being immobilized. Accordingly, the supporting member 4 can be prevented from becoming solidified as long as putting the body support assembly 1 in the moisture-proof bag, and thus the body support assembly 1 has excellent transporting capability, distributing ability and storing ability.

As explained above, the control means of this embodiment, the control means is arranged so as to cover both sides of the supporting member 4 with cloths 3 as the sheet members, the cloths 3 being seamed so as to divided the supporting member 4 into a plurality of sections 4A for controlling the relative movements of the granulated materials 2, the supporting member 4 containing a plurality of the granulated materials 2. The granulated materials 2 in the supporting member 4 can only move inside the respective sections 4A, and thus the body support assembly 1 can have a shape matching the flexible cloths 3. Specifically, since each of the granulated materials 2 has elasticity, the position of the user's body can be reliably supported, while the pressure from the user's body can be dispersed and thus the body support assembly 1 can have superior air permeability.

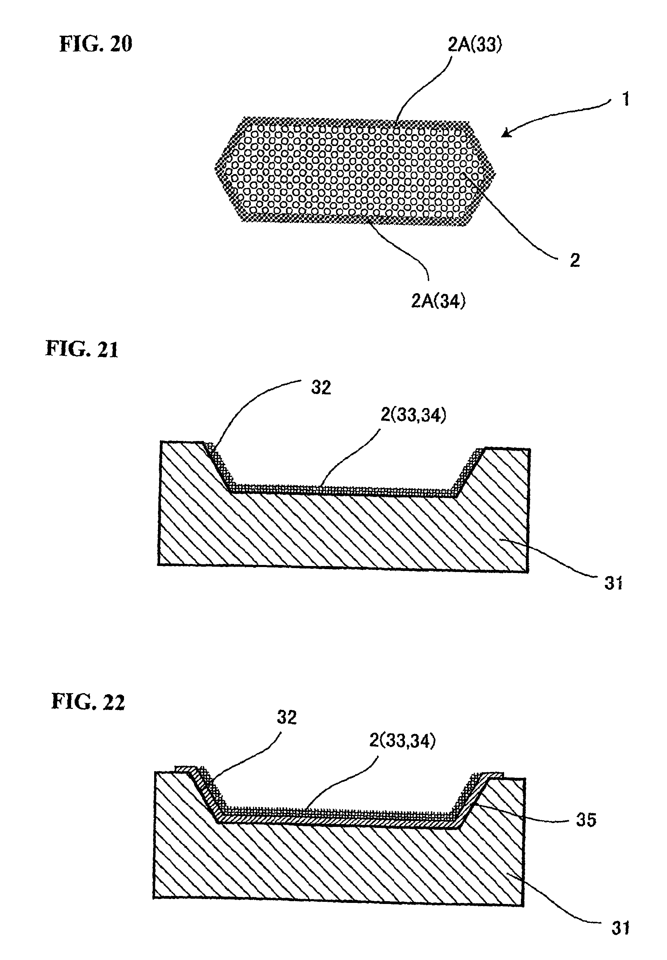

A seventh embodiment of the present invention will now be explained in detail. As shown in FIG. 20, in the body support assembly 1 according to this embodiment, the supporting member 4 employs a structure such that a mass of the plurality of granulated materials 2 coated with the moisture-curable resin is cured on its outside surface only so as to form a hardening layer 2A as the moisture permeable member, in a desired shape. In this embodiment, the control means for controlling the relative movements of the granulated materials 2 within the supporting member 4 comprises the hardening layer 2A. Since the granulated materials 2 are embraced by the hardening layer 2A and the granulated materials 2 move inside the hardening layer 2A and deforms inside thereof, the deformation of the granulated materials 2 is controlled by the hardening layer 2A. Accordingly, the granulated materials 2 do not deform significantly. The body support assembly 1 according to this embodiment can be used in the same way as explained in the first embodiment. Specifically, the productivity and economical efficiency of the body support assembly 1 can be improved since the supporting member 4 and the moisture-permeable material can be made from the same material at once.

The body support assembly 1 according to this embodiment can be manufactured as follows: as shown in FIG. 21, a mold 31 having a cavity 32 formed in the same shape as one surface of the body support assembly 1 is manufactured in advance, and the granulated materials 2 are thinly spread in the cavity 32, then water is applied by spraying or the like for allowing the moisture-curable resin to cure so as to form one side surface 33 of the hardening layer. The other side surface 34 of the hardening layer is formed in the same way, while both one side surface 33 and the other side surface 34 of the hardening layer are bonded so as to enclose the non-hardened granulated materials 2. Meanwhile, the above explanation is a conceptual one, and various modifications can be made. For example, as shown in FIG. 22, by placing a surface skin material 35 on the mold 31, spreading the granulated materials 2 thereon, and then forming the hardening layers 33, 34 integrally with the skin material 35, the breakup of the hardening layers 33, 34 can be prevented and thus the appearance of the body support assembly 1 can be improved.

Like the second to seventh embodiments, the control means can be in various modes as long as it can control the relative movements of the granulated materials 2 within the supporting member 4.

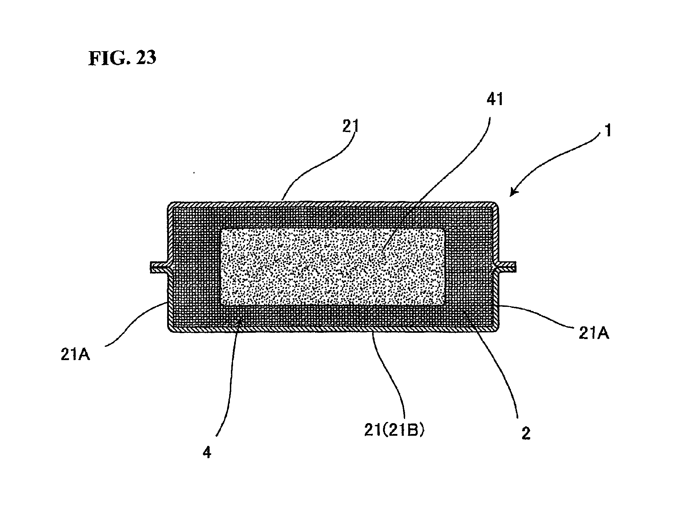

Next, an eighth embodiment of the present invention will now be explained in detail with reference to FIG. 23. The body support assembly 1 according to the eighth embodiment essentially employs the same structure as that of the third embodiment, and thus the same reference numbers will denote the same structure portions, while detailed explanations thereof will be omitted. In this embodiment, the body support assembly 1 of the third embodiment has a foamed member 41 such as foamed polyurethane or the like in the center portion of the supporting member 4, the foamed member 41 having elasticity. In this embodiment, the foamed member 41 serves as a volume variable means, while the volume variable means forms the contour of the body support assembly 1. Moreover, the foamed member 41 is provided inside the supporting member 4 so as to absorb the change of volume of the supporting member 4 as a buffering member.

With the structure such that the supporting member 4 includes the foamed member 41 inside thereof, when the user sits down while pressing the user's body to the body support assembly 1, the molded container 21 deforms, and the granulated materials 2 in the supporting member 4 move relative to one another, while the foamed member 41 contracts and rapidly deforms in the specific shape fitting to the user's body. The moisture-curable resin coating the surfaces of the granulated materials 2 cures in a short time (3-5 minutes), and thus the granulated materials 2 are immobilized. Accordingly, the foamed member 41 is allowed to hold the deformed shape, and thus the body support assembly 1 can hold the deformed shape. Specifically, the body support assembly 1 of this embodiment has excellent flexibility since it includes the foamed member 41 as well as the granulated materials 2 each having elasticity. Further, the amount of the granulated materials 2 coated with the relatively expensive and delicate moisture-curable resin can be reduced.

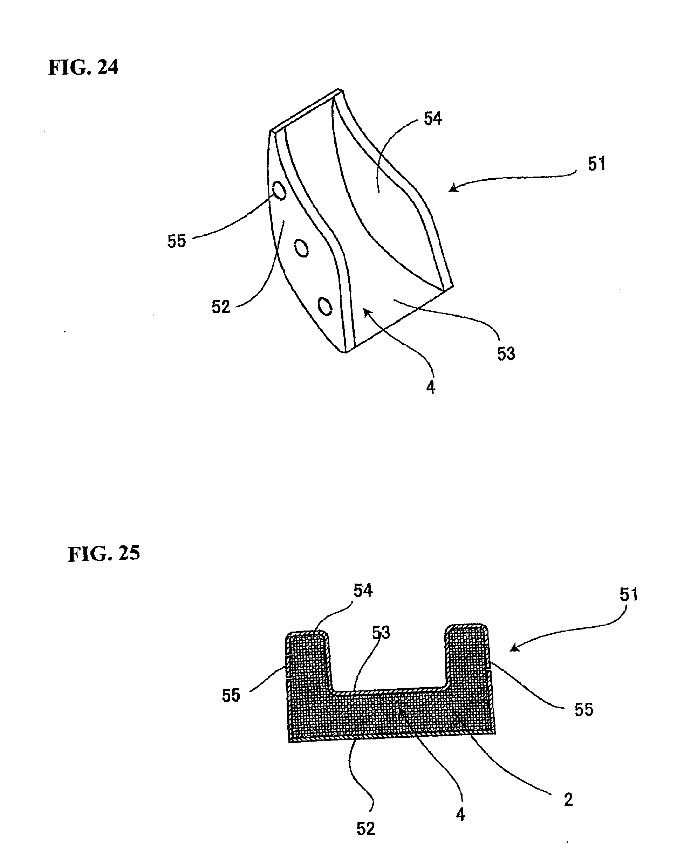

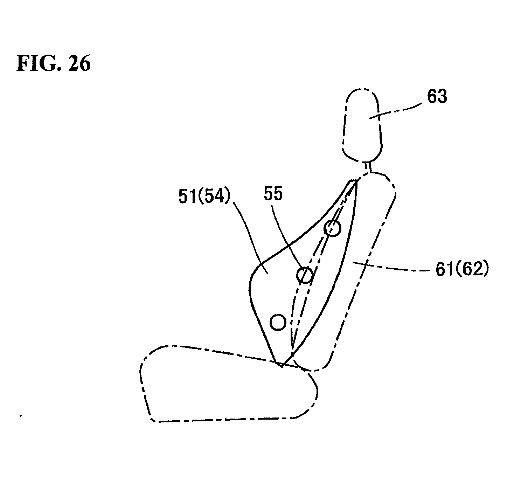

Next, a ninth embodiment of the present invention will now be explained in detail with reference to FIGs. 24 to 27. In the body support assembly 51 according to this embodiment, the supporting member 4 employs a structure such that the plurality of granulated materials 2 coated with the moisture-curable resin are contained between molded containers 52, 53 each having deformability The molded container 52 forming one side (rear side) of the supporting member 4, while the molded container 53 forming the other side (front side) of the supporting member 4. The molded containers 52, 53 have moisture permeability and comprise mesh materials made from flexible synthetic resins. As shown in FIG. 24, the body support assembly 51 is a bucket type support assembly such that it has a rectangular shape in a plane, with thick hold portions 54 on the right and left sides thereof three-dimensionally. Moreover, a plurality of openings 55 each having a larger diameter than that of the granulated material 2 are formed on the sidewalls of the molded container 52, while the sidewalls form the right and left hold portions 54. The openings 55 are each formed on the respective sidewalls of the molded container 52 by forming intermittent lines in a circle to have perforated tear portions. The openings 55 are arranged such that the perforated tear portions would be cleaved so as to open circular pores when the pressure inside the supporting member 4 increases as explained later.

In the body support assembly 51, the granulated materials 2 and the moisture-curable resin are the same as ones in the first embodiment. Further, the body support assembly 51 according to this embodiment is also put into a non-illustrated moisture-proof bag and sealed therein when preserved. Accordingly, the granulated materials 2 are not moisturized in this put-in condition, and thus hardening thereof is certainly prevented, while the moisture-curable resin coating the granulated materials 2 can cure in a short time by applying water, spraying a catalyst solution so as to be moisturized when the moisture-proof bag is opened. By putting over a cover sheet (not shown) which is proper for an automotive seat, for example, a stretchable fabric, the body support assembly 51 is completely hidden, and thus the significantly favorable appearance in this equipping condition can be obtained. The body support assembly 51 according to this embodiment is placed on the seat cover 62 covering the automotive seat 61. Meanwhile, reference number 63 denotes a headrest.

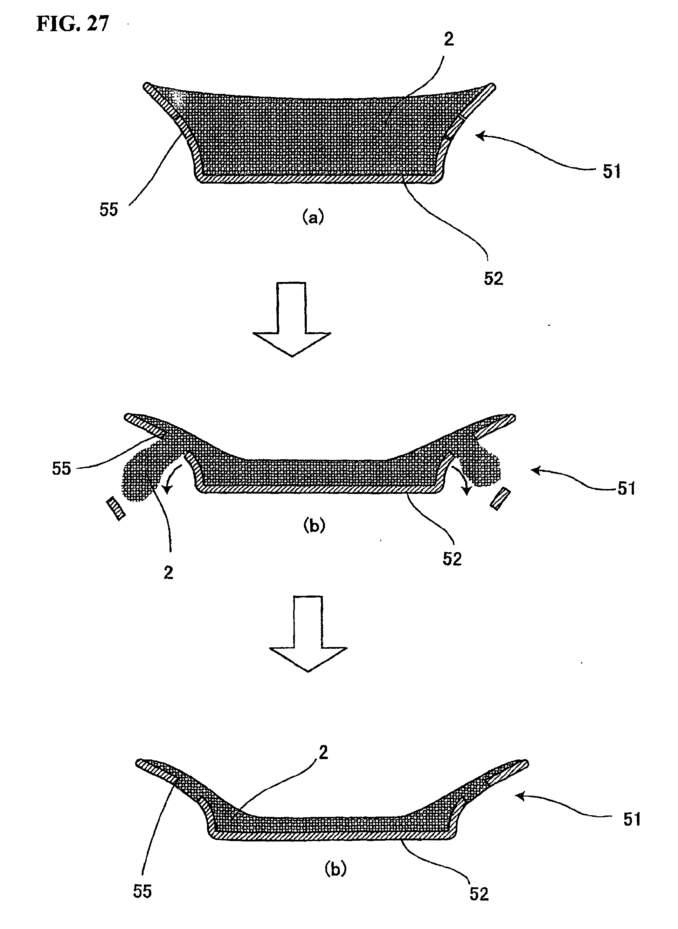

Next, operations of the body support assembly 51 employing the above-explained structure will now be explained. First of all, the body support assembly 51 is taken out from the moisture-proof bag (not shown). The moisture-curable resin starts curing (FIG. 27 (a)) when water is applied through the moisture permeating pores by spraying the water or the like to the molded containers 52, 53 (the moisture permeability member of the body support assembly 51). Then, the body support assembly 51 is put on the backrest 61A of the seat 61. Next, when the user presses the body support assembly 1 with the predetermined portion(s) of the user's body such as waist, back, legs and so on, the molded containers 52, 53 having flexibility, specifically, the molded container 53 forming the front side of the supporting member 4 deforms, and the granulated materials 2 in the supporting member 4 move relative to one another, the pressure from the granulated materials 2 in the supporting member 4 increases, and thus the perforated tear portions of the openings 55 are cleaved so as to open circular pores. The pressure inside the supporting member 4 increases in accordance with the amount of press the granulated materials 2 are given by the user, while the shape of the supporting member 4 is urged to be changed due to the pressure. In this embodiment, since the openings 55 are formed on the molded container 52, the openings 55 are opened (cleaved) when the pressure from the granulated materials 2 becomes greater than the predetermined amount of the pressure. A certain amount of the granulated materials 2 in accordance with the pressure, that is, the user's body shape are discharged from the openings 55 slowly due to the gelatinization thereof that accompanies the curing of the moisture-curable resin (FIG. 27 (b)). Accordingly, the supporting member 4 rapidly deforms its whole shape to the specific shape fitting to the user's body shape, the moisture-curable resin coating the surfaces of the granulated materials 2 starts curing in a short time (3-5 minutes), while the molded containers 52, 53 become solidified with the specific shape associated with the immobilization of the granulated materials 2. Then, the granulated materials 2 discharged from the openings 55 are cut (FIG. 27 (c)). As explained above, since the supporting member 4 is covered by the molded container 52 from one side thereof and the openings 55 are formed on the hold members 54, the granulated materials 2 are discharged from the openings 55 in accordance with the user's body shape so that the supporting member 4 is not deformed in any irregular shape. Moreover, the body support assembly 1 holds its shape by allowing the moisture-curable resin coating the granulated materials 2 to cure, but it can have appropriate softness as well as hardness since each granulated materials 2 has elasticity, while it can have air permeability so as to essentially prevent the user from getting sweaty when used for a long time since there is a pore space among the granulated materials 2. Therefore, it can provide a comfortable holding and cushioning performance to the user.

As explained above, the body support assembly 51 of this embodiment comprising: a supporting member including a plurality of granulated materials 2 coated with a moisture-curable resin; and molded containers 52, 53 as moisture permeable members being deformable by press and covering the supporting member 4, the body support assembly 51 being used by allowing: the molded members 52, 53 to contact a portion of a user's body so as to move the granulated materials 2 relative to one another; the supporting member 4 to deform in a shape according to the portion of the user's body; and the moisture-curable resin to cure, wherein the body support assembly 51 further comprises a volume variable means in the supporting member 4, the volume variable means defining a contour of the body support assembly 51. The volume variable means changes a volume of the supporting member 4 by allowing: at least one side of the supporting member 4 to be covered with a molded container 52 having a predetermined shape; the molded container 52 to be formed with a plurality of open-able sections; open side of the molded container 52 to be covered with the molded container 53 as a moisture permeable member that is deformable by press; the molded container 53 to come in contact with a portion of a user's body in order to deform the supporting member 4 and increase a pressure from the granulated materials 2 inside the supporting member 4 so that the plurality of open-able sections 55 are opened, while the granulated materials 2 are discharged from the opened open-able sections 55. The outer form of the body support assembly 1 can be defined by employing the above-explained structure. When the granulated materials 2 in the supporting member 4 are depressed and the pressure from the granulated materials 2 increases, the open-able sections 55 of the molded container 52 are opened and thus the granulated materials 2 are discharged from the opened open-able sections 55 and thus the volume of the supporting member 4 is changed in order to keep the outer form of the body support assembly 1. Accordingly, the supporting member 4 does not get out of shape. Therefore, the body support assembly 51 is suitable for a seat, a chair or the like. Specifically, since each of the granulated materials 2 has elasticity, the position of the user's body can be reliably supported, while the pressure from the user's body can be dispersed and thus the body support assembly 51 can have superior air permeability. Moreover, the user can get a comfortable sitting feeling by the holding member 54.

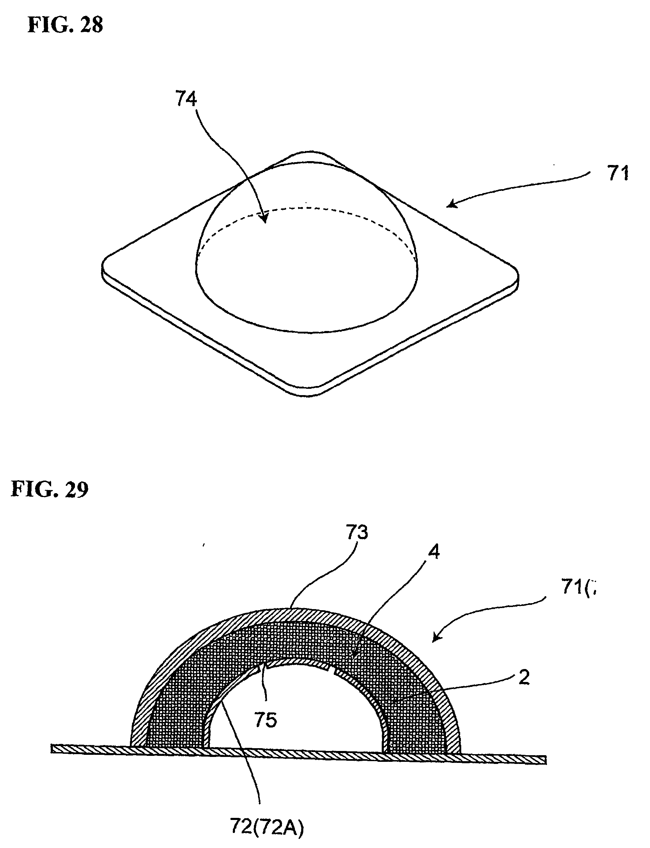

Further, a tenth embodiment of the present invention will now be explained in detail with reference to FIGs. 28 to 31. In the body support assembly 71 according to this embodiment, the supporting member 4 employs a structure such that the granulated materials 2 coated with the moisture-curable resin are contained between molded containers 72, 73. The molded container 72 forms one side (lower side) of the supporting member 4, while the molded container 73 forms the other side (upper side) of the supporting member 4. The molded containers 72, 73 are deformable or fragile, each having moisture permeability and comprising a mesh material made from flexible synthetic resins. As shown in FIG. 28, the planer shape of the body support assembly 71 is a rectangular with waney edges, while as shown in FIG. 29, the shape thereof at a cross section is one such that it has a hemispheric dorm portion 74 at the center thereof. In the body support assembly 74, the molded containers 72, 73 are made from synthetic resins, while on the dorm portion 72A of the molded container 72 forming the lower side, open-able sections 75 are each formed by forming intermittent lines in a circle. The open-able sections 75 are arranged such that the perforated tear portions would be cleaved so as to open circular pores when the pressure inside the supporting member 4 increases as explained later.

The volume variable means according to this embodiment comprises: the molded container 72 with a predetermined shape which covers at least one side of the supporting member 4; the open-able sections 75 formed on the molded container 72; and the molded container 73 which covers the open side of the molded container 72 as a flexible and deformable moisture-permeable member. The volume variable means changes the volume of the supporting member 4 by: increasing the pressure from the granulated materials 2 in the supporting member 4 by allowing the molded container 73 to be put the portion of the user's body in order to be pressed and deformed; opening the open-able sections 75 by the increased pressure; and discharging the granulated materials 2 from the open-able sections 75.

In the body support assembly 71, the granulated materials 2 and the moisture-curable resin are the same in the first embodiment. Further, the body support assembly 71 according to this embodiment is also put into a non-illustrated moisture-proof bag and sealed therein when stored. Accordingly, the granulated materials 2 are not moisturized in this put-in condition, and thus immobilization thereof is certainly prevented, while the moisture-curable resin coating the granulated materials 2 can cure in a short time by adding water, spraying a catalyst solution so as to allow the moisture-curable resin to be moisturized when the moisture-proof bag is opened. By putting over a stretchable cloth (not shown), the appearance of the body support assembly 71 can be improved. The above-explained body support assembly 71 according to this embodiment is placed in, for example, a shoe so as to align to a planer arch of the user's foot.

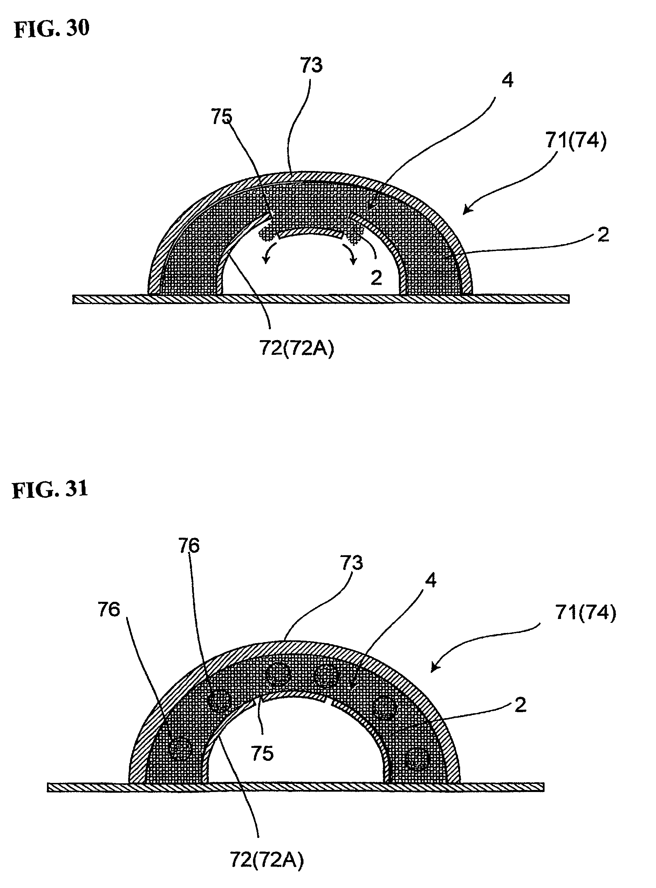

Next, operations of the body support assembly 71 employing the above-explained structure will now be explained. First of all, the body support assembly 71 is taken out from the moisture-proof bag (not shown). The moisture-curable resin starts curing (FIG. 29) when water is applied from the pores by spraying the water or the like to the molded containers 72, 73 (the moisture permeability member of the body support assembly 71). Then, the body support assembly 71 is put in the shoe so as to align to the planer arch of the user's foot. Next, when the user puts his/her leg into the shoe, the molded containers 72, 73 with flexibility or fragility, specifically, the molded container 73 on the upper side is deformed, and thus the granulated materials 2 in the supporting member 4 move relative to one another. The pressure from the granulated materials 2 in the supporting member 4 increases, and thus the perforated tear portions of the open-able sections 75 are cleaved so as to open circular pores. The pressure inside the supporting member 4 increases in accordance with how much the granulated materials 2 are pressed by the user, while the shape of the supporting member 4 is urged to be changed due to the pressure. In this embodiment, since the open-able sections 75 are formed on the molded container 72, the open-able sections 75 are opened when the pressure from the granulated materials 2 becomes greater than the predetermined pressure. A certain amount of the granulated materials 2 in accordance with the pressure, that is, the user's body shape are discharged from the open-able sections 75 slowly due to the gelatinization thereof that accompanies the curing of the moisture-curable resin (FIG. 30). Accordingly, the supporting member 4 rapidly deforms its initial shape to the specific shape fitting to the user's leg, the moisture-curable resin coating the surfaces of the granulated materials 2 cures in a short time (3-5 minutes), while the molded containers 72, 73 become solidified with the specific shape associated with the immobilization of the granulated materials 2. As explained above, the body support assembly 71 according to this embodiment can be used as a small type supporting member such as an inner sole. Meanwhile, a foamed member 76 made from foamed polyurethane and have elasticity may be provided on the center portion of the supporting member 4 as shown in FIG. 31. By allowing the supporting member 4 to include the foamed member 76 as the volume variable means, the granulated materials 2 in the supporting member 4 move, while the foamed member 76 contracts and rapidly deforms in the shape fitting to the user's foot. Then, the moisture-curable resin coating the surfaces of the granulated materials 2 cures in a short time (3-5 minutes), the granulated materials 2 are immobilized, while the foamed member 76 can keep its contracted shape and hold its contracted shape.

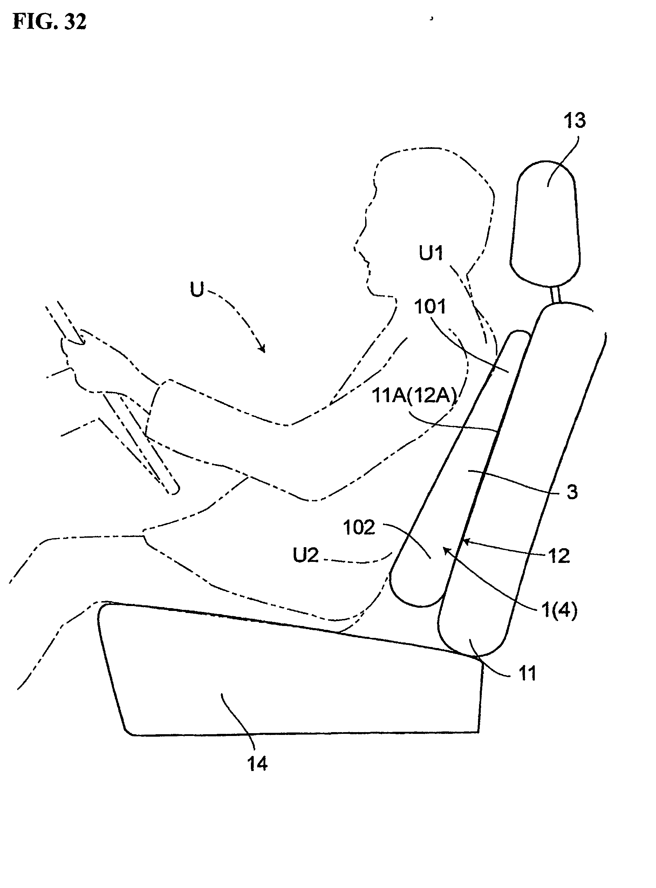

Next, an eleventh embodiment of the present invention will now be explained in detail with reference to FIG. 32. The body support assembly 1 of this embodiment supports the body of the user U from the shoulder U1 to the waist U2, and arranged such that the thickness thereof decreases toward a shoulder supporting member 101 from a waist supporting member 102. Accordingly, an inter space between the back of the user U and the backrest 11A is not essentially created, and thus the head of the user can be stably supported by the headrest 12 since the user's shoulder can be supported by the body support assembly 1. Meanwhile, the body support assembly 1 according to this embodiment can employ the same structures explained in each of the above embodiments. Moreover, the shoulder supporting member 101 and the waist supporting member 102 constitute a backrest obverse portion which is placed on the backrest 11S.

As explained in this embodiment, the supporting member 4 is placed on the backrest 11A of the seat 11, it has the waist supporting member 102 and the shoulder supporting member 101 while it becomes thinner to the shoulder supporting member 101, and thus an inter space between the shoulder U1 of the user U and the backrest portion 11A is not essentially created. Therefore, the head of the user U can be stably supported by the headrest.

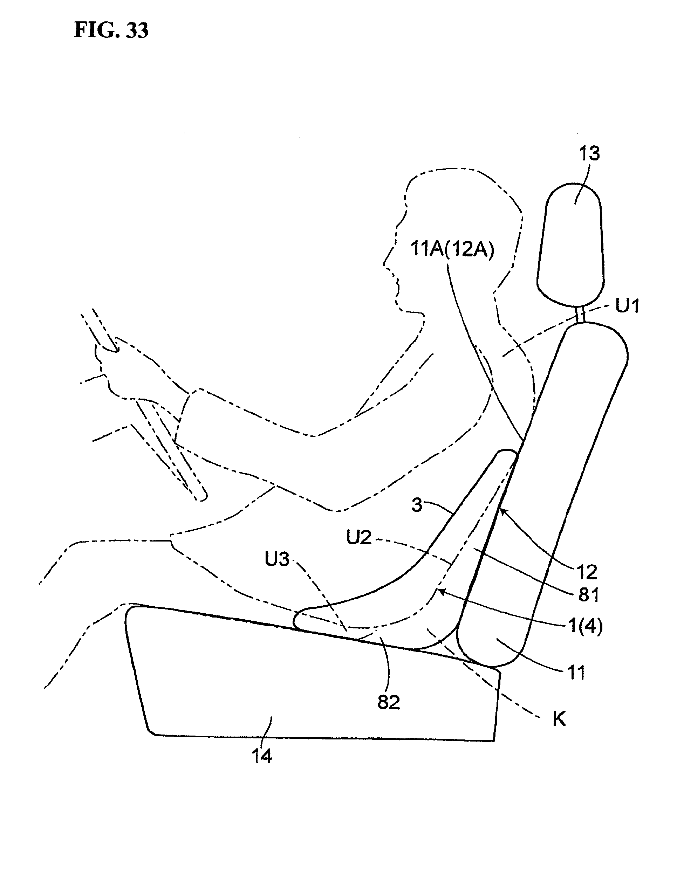

Next, a twelfth embodiment of the present invention will now be explained in detail with reference to FIG. 33. The body support assembly 1 of this embodiment has a backrest obverse portion 81 contacting the backrest 11 and a bottom obverse portion 82 contacting the bottom 14 of the seat 11. The backrest obverse portion 81 extends beyond the waist U2, while the body support assembly 1 is formed in a shape such that it occupies a corner space K between the front lower portion of the backrest 11 and the rear upper portion of the bottom 14. In a case where the seat 11 is reclining type as illustrated, a stress is applied to the waist U2 due to the generation of the corner space K. However, the body support assembly 1 according to this embodiment can improve the seating feeling of the user U by occupying the corner space K. Meanwhile, the body support assembly 1 of this embodiment can employ the structures explained in each of the above explained embodiments.

As explained, since the supporting member 4 has the backrest obverse portion 81 placed on the backrest 11A of the seat 11 and the bottom obverse portion 82 provided on the bottom 14 of the seat 11, the body portion of the user U from the waist U2 to the shoulder U3 can be held, while an area to be supported by the body support assembly 1 is enlarged, and thus a stress partially applied to the waist U2 can be reduced. Therefore, a generation of a backache due to driving a car in a driving position can be prevented.

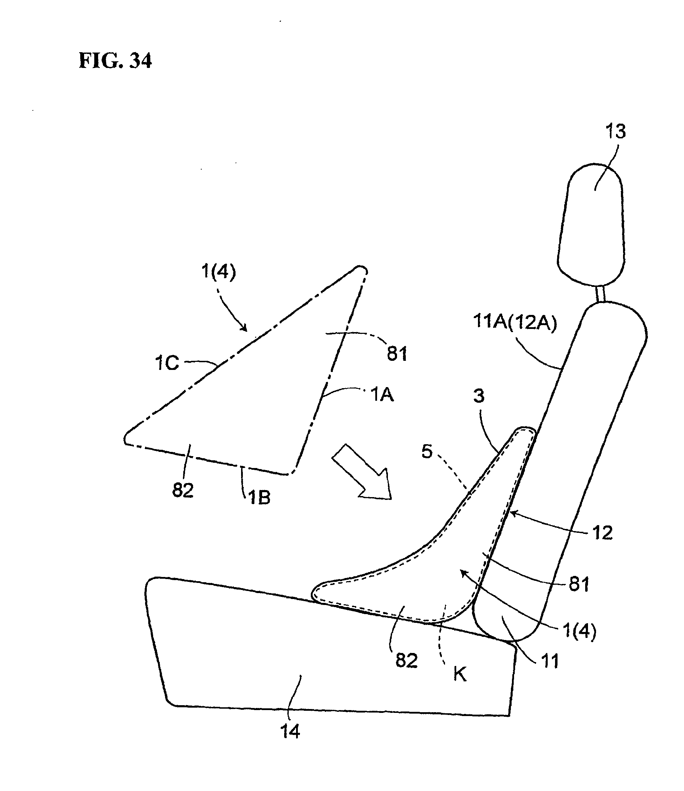

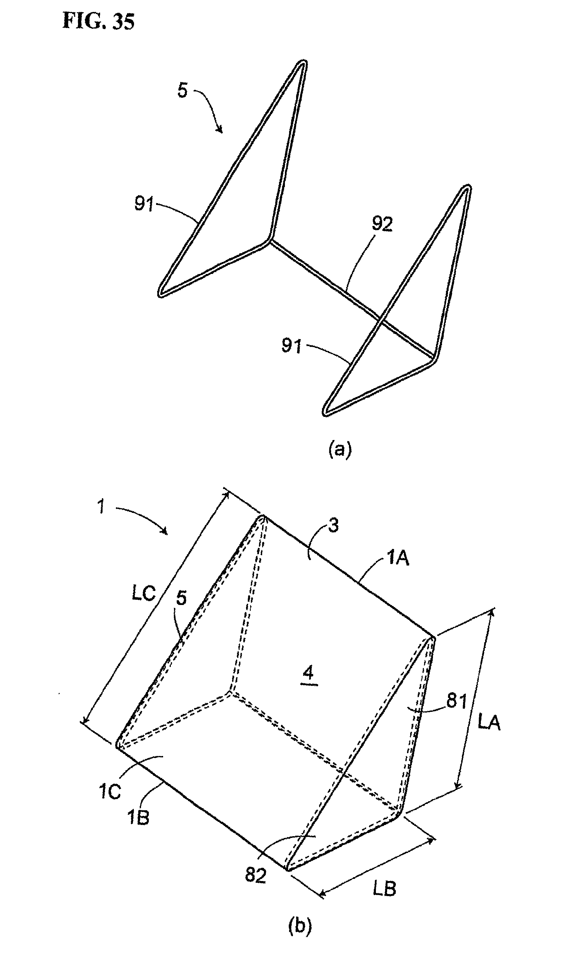

Next, a thirteenth embodiment of the present invention will now be explained in detail with reference to FIGs. 34 and 35. The body support assembly 1 according to the twelfth embodiment has a frame 5. As illustrated, the body support assembly 1 is formed in a triangular prism shape in profile, while it has: a backrest contacting plane 1A coming in contact with the backrest 11A; a bottom contacting plane 1B coming in contact with the bottom 14; and an inclined plane 1C in its triangular cross section. The length LA of the backrest contacting plane 1A is longer than the length LB of the bottom contacting plane 1B, while the length LC of the inclined plane 1C is longer than the length LA. The body of the user U comes in contact with the inclined plane 1C. Moreover, the frame 5 serves as the controlling means, and has triangular portions 91 corresponding to the side ends of the body support assembly 1. The triangular portions 91 are coupled with each other by a coupling frame member 92 placed in the width direction of the body support assembly 1, while the edges of the triangular portions 91 are formed by bending. Since the frame 5 does not occupy the spaces above and below of the inclined surface 1C, the user U does not feel the frame 5 when sitting.

In this embodiment, the control means comprises the frame 5 embracing the outer peripheral edge of the supporting member 4, and thus the body support assembly 1 can hold its contour along the frame 5.

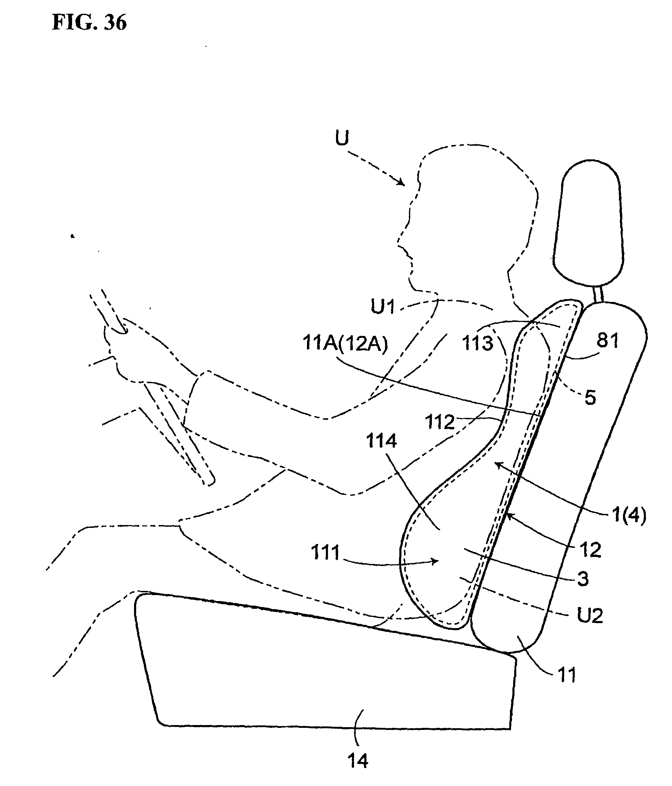

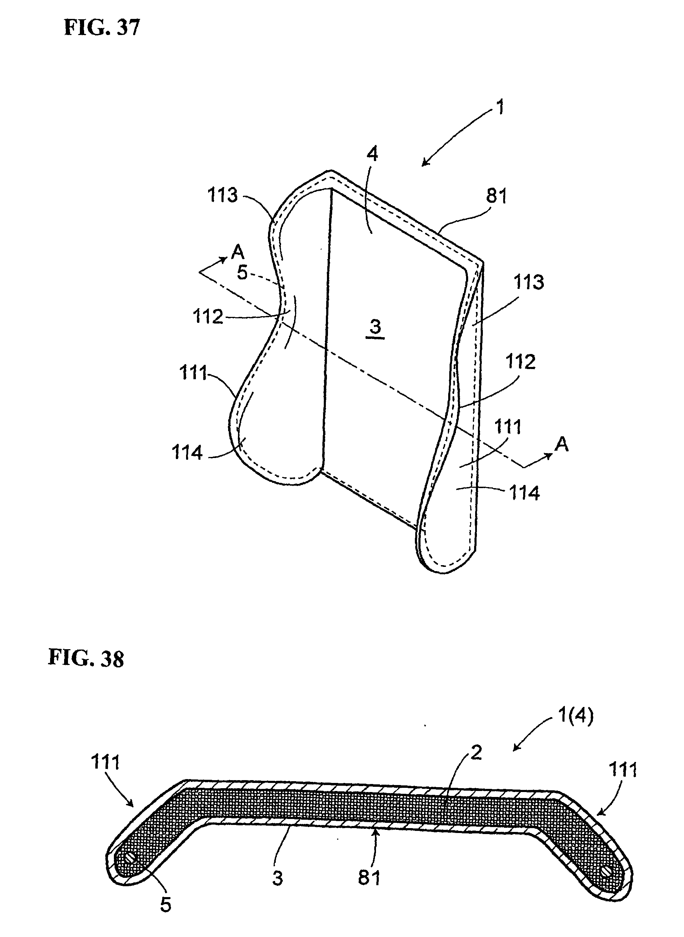

Next, a fourteenth embodiment of the present invention will now be explained in detail with reference to FIG. 36. The body support assembly 1 according to this embodiment has the frame 5 as the control means. The body support assembly 1 is bucket seat type such that hold portions 111 are formed on the right and left ends of the backrest obverse portion 81 placed on the backrest 11A. Meanwhile, the upper portion of the backrest obverse portion 81 extends to the shoulder U1 of the user U. Each of the hold portions 111 has: a concave portion 112 concaving toward the backward and provided on the center in the direction of its height; convex portions 113, 114 protruding toward the frontward and provided on the upper and lower portions of the concave portion 112, respectively. The upper convex portion 113 holds the shoulder U1 of the user U, while the lower convex portion 114 holds the portion of the user's body around the waist U2. FIG. 38 shows a cross sectional view of the body support assembly 1 before used. The hold portion 111 is formed such that the edges of the backrest obverse portion 81 are preliminary bent toward the frontward with slopes. Moreover, the frame 5 is formed in a shape such that it follows the upper and lower portions of the backrest obverse portion 81 and the front ends of the hold portions 111 provided on the right and left of the backrest obverse portion 81. The hold portions 111 are placed so as to wrap the body of the user U from the right and left thereof.

As explained above, since the supporting member 4 is placed on the backrest 11A of the seat 11, while the hold portions 111 are provided on the right and left ends of the supporting member 4 in this embodiment, the back of the user U can be held from both sides thereof and thus the user U can sit down without a stress to his/her muscle from the waist to the shoulder thereof. Therefore, the stress to the waist can be reduced.

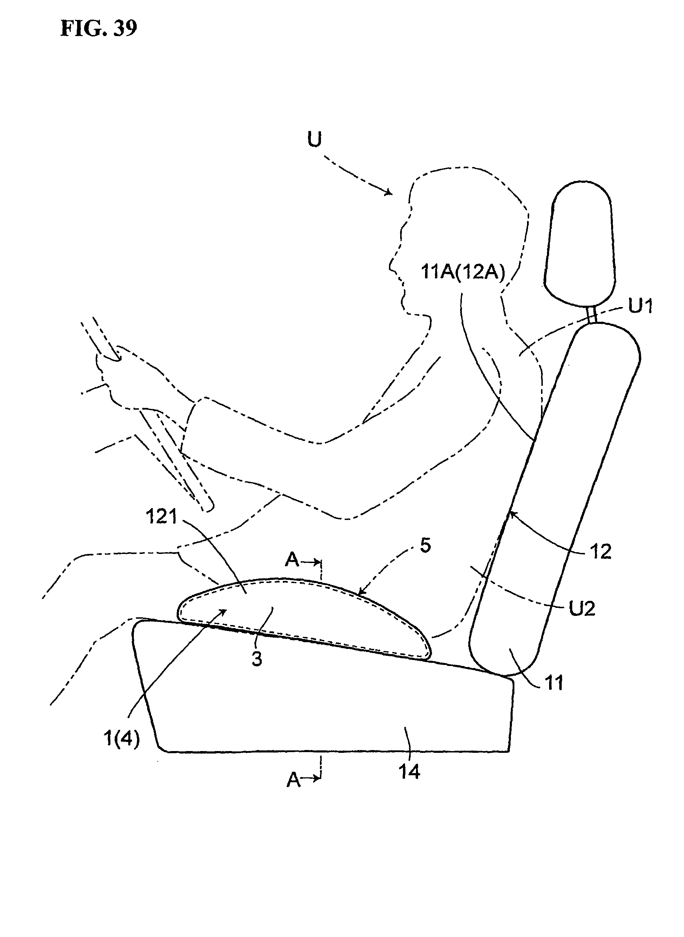

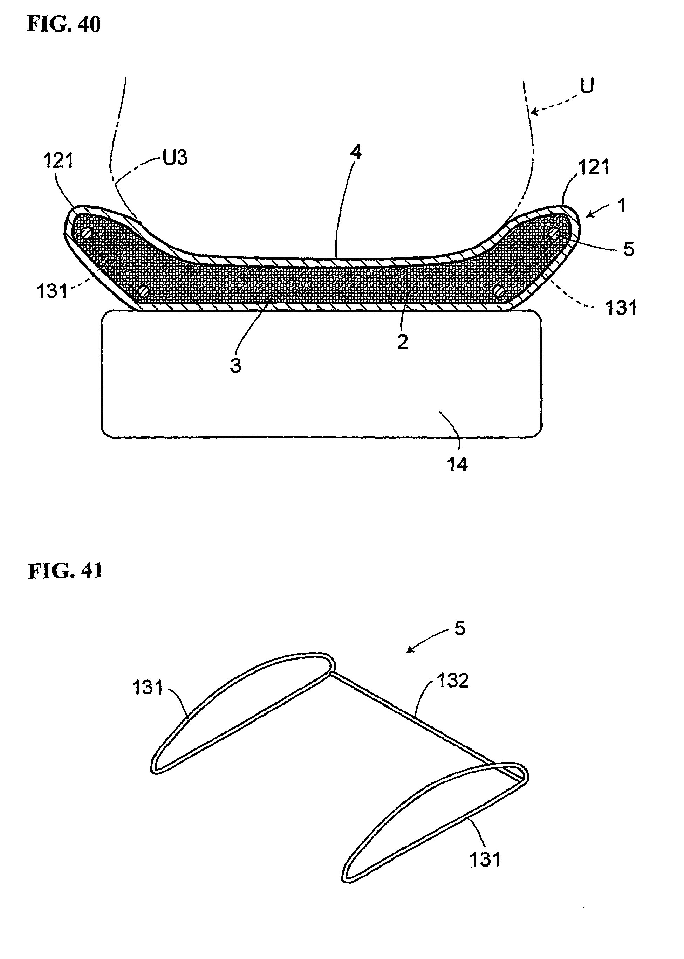

Next, a fifteenth embodiment of the present invention will now be explained in detail with reference to FIGs. 39 to 41. The body support assembly 1 according to this embodiment has a frame 5 as the control means, and placed on the bottom 14 by laying or the like. Thicker hold portions 121 are provided on the right and left ends of the supporting member 4. The hold portions 121 are formed such that the right and left ends of the supporting member 4 are bent upward with angles respectively and aligned so as to hold the body of the user U from the right and left thereof. Moreover, as shown in FIG. 41, the frame 5 has side portions 131 on right and left sides thereof relative to the hold members 121, while the right and left side portions 131 are coupled with each other by a coupling frame member 132.

As explained above, the supporting member 4 is placed on the bottom 14 of the seat 11 while the hold portions 121 are provided on the right and left ends of the supporting member 4 in this embodiment, the hip U3 of the user U can be held from the right and left thereof, and thus the user U can correctly hold a seating position.

The above-explained embodiments are intended to illustrate the present invention, not to limit the scope of the present invention, and various embodiments and changes may be made thereonto without departing from the broad spirit and scope of the invention. For example, in order to change the volume of the supporting member, the granulated materials coated with the moisture-curable resin may be covered with a moisture permeable member deformable by press such as the stretchable cloth 3, while the gathering portion may be provided on the ends of the cloth 3. Further, as the deformable-by-press moisture permeable member, any material can be used as long as it is deformable by press, having moisture permeability, and thus it is not limited to a cloth or a container made from plastic, but can be paper, natural or artificial leather, etc. Further, the material may be one which essentially does not have moisture permeability but is given the property by being formed with openings, by a needle punch or the like. A film or sheet made from synthetic resin may be used as the material in that case.

## Claims

1. A body support assembly comprising: a supporting member including a plurality of granulated materials coated with a moisture-curable resin; and a moisture permeable member being deformable by press and covering said supporting member, said body support assembly being used by allowing: said moisture permeable member to contact a portion of a user's body so as to move said granulated materials relative to one another; said supporting member to deform in a shape according to the portion of the user's body; and said moisture-curable resin to cure,
wherein said body support assembly further comprises a control means for controlling relative movements of said granulated materials, said control means defining a contour of said body support assembly.

2. The body support assembly according to claim 1, wherein said control means comprises a frame embracing an outer peripheral edge of said supporting member.

3. The body support assembly according to claim 1, wherein:
said moisture permeable member comprises a molded container having flexibility and moisture permeability; and
said control means is arranged so as to cover said supporting member from one side thereof with said molded container and seal off an open side of said molded container.

4. The body support assembly according to claim 1, wherein:
said moisture permeable member comprises molded containers each having flexibility and moisture permeability; and
said control means is arranged so as to cover a whole circumference of said supporting member with said molded containers.

5. The body support assembly according to claim 1, wherein:
said moisture permeable member comprises a hardening layer of said granulated materials coated with said moisture-curable resin, said granulated materials being hardened in a predetermined shape; as a whole; and
said control means has said hardening layer.

6. The body support assembly according to claim 1, wherein:
said moisture permeable member comprises flexible sheet members; and
said control means is arranged so as to cover both sides of said supporting member with said sheet members, said sheet members being seamed so as to divide said supporting member into a plurality of sections.

7. A body support assembly comprising: a supporting member including a plurality of granulated materials coated with a moisture-curable resin; and a moisture permeable member being deformable by press and covering said supporting member, said body support assembly being used by allowing: said moisture permeable member to contact a portion of a user's body so as to move said granulated materials relative to one another; said supporting member to deform in a shape according to the portion of the user's body; and said moisture-curable resin to cure,
wherein said body support assembly further comprises a volume variable means in said supporting member, said volume variable means defining a contour of said body support assembly.

8. The body support assembly according to claim 7, wherein said volume variable means changes a volume of said supporting member by allowing:
at least one side of said supporting member to be covered with a molded container having a predetermined shape;
said molded container to be formed with a plurality of open-able sections;
an open side of said molded container to be covered with a deformable-by-press moisture permeable member;
said moisture permeable member to come in contact with a portion of a user's body in order to deform the supporting member and increase a pressure from said granulated materials inside said supporting member so that said plurality of open-able sections are opened, while said granulated materials are discharged from said opened open-able sections.

9. The body support assembly according to claim 7, wherein said volume variable means is provided inside said supporting member and serves as a buffering member absorbing a change of volume of said supporting member.

10. The body support assembly according to claim 9, wherein said buffering member comprises a foamed member.

11. The body support assembly according to claim 1, wherein said supporting member is arranged to include a foamed member so as to change a volume thereof.

12. The body support assembly according to claim 1, wherein:
said supporting member is provided on a backrest of a seat, said supporting member comprising a waist supporting member and a shoulder supporting member; and
said supporting member is formed such that thickness thereof decreases toward said shoulder supporting member.

13. The body support assembly according to claim 1, wherein said supporting member comprises:
a backrest obverse portion placed on a backrest of a seat; and
a bottom obverse portion placed on a bottom of said seat.

14. The body support assembly according to claim 13, wherein said control means comprises a frame embracing outer peripheral edge of said supporting member.

15. The body support assembly according to claim 1, wherein:
said supporting member is placed on a backrest of a seat; and
hold members are formed on right and left ends of said supporting member.

16. The body support assembly according to claim 1, wherein:
said supporting member is placed on a bottom of a seat; and
holding members are formed on right and left ends of said supporting member.
